# EUROPEAN PATENT APPLICATION

(11) **EP 4 797 821 A1**
(43) Date of publication of application: **26.08.2026**
(21) Application number: 24887997.5
(22) Date of filing: 06.11.2024
(51) Int. Cl.: H04W 64/00

(54) **COMMUNICATION METHOD AND COMMUNICATION APPARATUS**

(30) Priority: 07.11.2023 CN 202311479840
(71) Applicant: HUAWEI TECHNOLOGIES CO., LTD., Shenzhen, Guangdong 518129 (CN)
(72) Inventor: TIAN, Yang, Shenzhen, Guangdong 518129 (CN); JIN, Yu, Shenzhen, Guangdong 518129 (CN); SUN, Yan, Shenzhen, Guangdong 518129 (CN)
(74) Representative: Pfenning, Meinig & Partner mbB
(86) International application number: PCT/CN2024/130208
(87) International publication number: WO 2025/098386

(57) **Abstract**

This application relates to the field of localization technologies, and provides a communication method and a communication apparatus. In the method, a core network device obtains at least one piece of location information, where the at least one piece of location information is from different apparatuses, and each piece of location information identifies a location of a same reflecting surface on a spatial map. The core network device determines, from the at least one piece of location information, location information with highest confidence or location information with confidence higher than a specific value, and constructs, based on the location information, a fingerprint database for localization. In this way, accuracy of locating a terminal device can be effectively improved.

## Description

This application claims priority to Chinese Patent Application No. 202311479840.6, filed with the China National Intellectual Property Administration on November 7, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

Currently, an indoor localization technology includes a fingerprint database-based localization method, which further includes a fingerprint database construction stage and a fingerprint matching stage.

In the fingerprint database construction stage, a fingerprint database is constructed through simultaneous localization and mapping (simultaneous localization and mapping, SLAM)-based environment sensing. For example, an indoor space obtained through SLAM-based environment sensing is first divided into multiple equidistant grid points. A network device measures a sounding reference signal (sounding reference signal, SRS) sent by a terminal device deployed on one grid point, obtains an angle of arrival (angle of arrival, AoA) and a time of arrival (time of arrival, ToA) of the SRS, and constructs a corresponding reflecting surface based on the AoA, the ToA, and contour information of the indoor space. The network device further infers AoAs and ToAs of other grid points based on a geometric relationship between the reflecting surface and the grid points, and constructs fingerprint information (for example, the AoAs and the ToAs) of the grid points based on the information, to construct a fingerprint database of the indoor space.

In the fingerprint matching stage, the network device determines the corresponding grid points based on the obtained AoAs and ToAs to locate the terminal device.

However, a localization result obtained based on this solution cannot satisfy requirements of high-accuracy localization.

### SUMMARY

This application provides a communication method and a communication apparatus, to improve accuracy of locating a terminal device.

According to a first aspect, a communication method is provided. The method includes: obtaining a channel measurement result of a first signal; sending first location information, where the first location information identifies a location of a first reflecting surface on a spatial map, and the first location information is determined based on the channel measurement result of the first signal and information about the spatial map; and receiving first information, where the first information indicates confidence of the first location information.

An execution body of the solution in the first aspect may be a first apparatus, or may be a module (for example, a chip system) of the first apparatus, or may be a logical node, a logical module, or software that can implement all or a part of functions of the first apparatus. This is not limited. For ease of description, the following uses the first apparatus as an example for description.

It should be noted that the location of the first reflecting surface in the spatial map is associated with a transmission path of a signal. The first reflecting surface may be understood as a thing that has a function of changing the transmission path of the signal. For example, the first reflecting surface may change or reflect a transmission path of the first signal.

In this solution, the first apparatus sends the first location information to a core network device, where the first location information can identify the location of the first reflecting surface on the spatial map. The core network device determines the confidence of the first location information, and sends the confidence of the first location information to the first apparatus. The first apparatus may determine, based on the confidence of the first location information, whether to obtain new location information identifying a location of the first reflecting surface on the spatial map. For example, when the confidence of the first location information is lower than a specific value, the first apparatus obtains new location information. When the confidence of the first location information is higher than or equal to a specific value, the first apparatus locates a terminal device based on the first location information, or may construct a fingerprint database based on the first location information.

Based on this solution, the first apparatus or the core network device may locate the terminal device or construct the fingerprint database based on location information with higher confidence or location information with confidence higher than a specific value. Compared with a solution in which a first apparatus directly locates a terminal device or constructs a fingerprint database based on first location information, the solution can effectively prevent the first apparatus from using location information with low accuracy (the low accuracy may be caused by a measurement error or a multipath transmission factor) for localization or fingerprint database construction, to effectively improve accuracy of locating the terminal device.

In a possible implementation, the confidence of the first location information is higher than or equal to a first value, and the method further includes: locating a terminal device based on the first location information, where the first value is predefined, or the first value is preconfigured.

In this way, the first apparatus can locate the terminal device based on the first location information with confidence higher than the first value, to improve accuracy of locating the terminal device.

In a possible implementation, the confidence of the first location information is lower than or equal to a second value, and the method further includes: obtaining a channel measurement result of a second signal; and determining second location information based on the channel measurement result of the second signal and the information about the spatial map, where the second location information identifies a location of the first reflecting surface on the spatial map. The second value is predefined, or the second value is preconfigured.

When the confidence of the first location information is lower than or equal to the second value, the first apparatus may determine new location information identifying a location of the first reflecting surface on the spatial map. In this way, the first apparatus can obtain location information with higher confidence or location information that satisfies a specific requirement, to improve the accuracy of locating the terminal device.

In a possible implementation, the method further includes: sending the second location information; and receiving second information, where the second information indicates confidence of the second location information.

In this way, the first apparatus can determine the confidence of the second location information, and determine, based on the confidence of the second location information, whether localization or fingerprint database construction can be performed based on the second location information.

In a possible implementation, the confidence of the second location information is higher than or equal to a third value, and the method further includes: locating a terminal device based on the second location information.

In this way, the first apparatus can locate the terminal device based on the second location information with confidence higher than the third value, to improve the accuracy of locating the terminal device.

In a possible implementation, the confidence of the second location information is higher than the confidence of the first location information.

The core network device sends, to the first apparatus, the first information indicating the confidence of the first location information, so that the first apparatus performs location information iteration based on the first information, to obtain location information with higher confidence, and the first apparatus can locate the terminal device or construct the fingerprint database based on the location information with higher confidence.

In a possible implementation, the method further includes: obtaining the information about the spatial map.

In this way, the first apparatus may determine, based on the information about the spatial map, the location information identifying the location of the first reflecting surface on the spatial map.

In a possible implementation, a location of a transmit end of the first signal is located on the spatial map.

Both the location of the transmit end of the first signal and a location of the first apparatus are known. The first apparatus may determine the first location information based on the location of the transmit end of the first signal, the location of the first apparatus, the channel measurement result of the first signal, and information about the spatial map.

In this way, the first apparatus may determine the first location information based on the location of the transmit end of the first signal and the channel measurement result of the first signal.

In a possible implementation, a location of a transmit end of the second signal is the same as the location of the transmit end of the first signal.

Because the location of the transmit end of the first signal is the same as the location of the transmit end of the second signal, the first apparatus can determine, based on the same location of the transmit ends of the signals, location information with higher confidence, to reduce impact of a measurement error on the confidence of the location information.

According to a second aspect, a communication method is provided. The method includes: determining confidence of first location information, where the first location information identifies a location of a first reflecting surface on a spatial map; and sending first information, where the first information indicates the confidence of the first location information.

An execution body of the solution in the second aspect may be a core network device, or may be a module (for example, a chip system) of the core network device, or may be a logical node, a logical module, or software that can implement all or a part of functions of the core network device. This is not limited. For ease of description, the following uses the core network device as an example for description.

In this solution, the core network device determines the confidence of the first location information, and sends the confidence of the first location information to the first apparatus. The first apparatus may determine, based on the confidence of the first location information, whether to obtain new location information identifying the location of the first reflecting surface on the spatial map. For example, when the confidence of the first location information is lower than a specific value, the first apparatus obtains new location information. When the confidence of the first location information is higher than or equal to a specific value, the first apparatus locates the terminal device based on the first location information, or may construct a fingerprint database based on the first location information.

Based on this solution, the first apparatus or the core network device may perform localization or fingerprint database construction based on location information with higher confidence or location information with confidence higher than a specific value. Compared with a solution in which a first apparatus directly locates a terminal device or constructs a fingerprint database based on first location information, the solution can effectively prevent the first apparatus from using location information with low accuracy (the low accuracy may be caused by a measurement error or a multipath transmission factor) for localization or fingerprint database construction, to effectively improve accuracy of locating the terminal device.

In a possible implementation, determining the confidence of the first location information includes: obtaining a first set, where the first set includes at least one piece of location information, each piece of location information in the first set identifies a location of the first reflecting surface on the spatial map, and the first set includes the first location information; and determining the confidence of the first location information through weighted averaging on the first set.

In this way, the core network device can determine the confidence of the first location information through weighted averaging on the first set, so that the first apparatus or the core network device can perform localization or fingerprint database construction based on location information with higher confidence or confidence higher than a specific value.

In a possible implementation, determining the confidence of the first location information includes: obtaining a first set, where the first set includes at least one piece of location information, each piece of location information in the first set identifies a location of the first reflecting surface on the spatial map, and the first set includes the first location information; and determining a ground truth of the location of the first reflecting surface on the spatial map through weighted averaging on the first set, and determining the confidence of the first location information based on the ground truth and the first location information.

In this way, the core network device can determine, through weighted averaging on the first set, the ground truth representing the location of the first reflecting surface on the spatial map, and can determine the confidence of the first location information based on a distance between the ground truth of the location and the first location information. In this way, the confidence of the first location information is more reliable, and the first apparatus or the core network device can perform localization or fingerprint database construction based on location information with higher confidence or confidence higher than a specific value.

In a possible implementation, determining the confidence of the first location information includes: obtaining a first set, where the first set includes at least one piece of location information, each piece of location information in the first set identifies a location of the first reflecting surface on the spatial map, and the first set includes the first location information; and determining the confidence of the first location information based on a proportion of a feedback count of the first location information in the first set.

In this way, the core network device can determine the confidence of the first location information based on the proportion of the feedback count of the first location information, so that the confidence of the first location information is more reliable (because a plurality of devices feed back same location information, confidence of the location information is higher than confidence of location information that is fed back for fewer times), and the first apparatus or the core network device can perform localization or fingerprint database construction based on the location information with the higher confidence or location information with confidence higher than a specific value.

In a possible implementation, determining confidence of second location information includes normalizing the confidence determined based on the location ground truth or the confidence determined based on the proportion of the feedback count, that is, comparing the confidence with a threshold, setting confidence higher than or equal to the threshold to a value, for example, 1, and setting confidence lower than the threshold to another value, for example, 0.

In this way, signaling overheads of confidence indication can be reduced in NR.

In a possible implementation, the confidence of the first location information is higher than or equal to a first value, and the method further includes: determining a fingerprint database based on the first location information, where the fingerprint database is for locating an apparatus; and the first value is predefined, or the first value is preconfigured.

In this way, the core network device can construct the fingerprint database based on the location information with higher confidence or confidence higher than a specific value, to effectively improve the accuracy of locating the terminal device.

In a possible implementation, the method further includes: determining confidence of second location information, where the second location information identifies a location of the first reflecting surface on the spatial map.

The core network device can determine the confidence of the second location information, and determine, based on the confidence of the second location information, whether localization or fingerprint database construction needs to be performed based on the second location information.

In a possible implementation, determining the confidence of the second location information includes: obtaining a second set, where the second set includes at least one piece of location information, each piece of location information in the second set identifies a location of the first reflecting surface on the spatial map, and the second set includes the second location information; and determining the confidence of the second location information through weighted averaging on the second set.

In this way, the core network device can determine the confidence of the second location information through weighted averaging on the second set, so that the first apparatus or the core network device can perform localization or fingerprint database construction based on location information with higher confidence or confidence higher than a specific value.

In a possible implementation, determining the confidence of the second location information includes: obtaining a second set, where the second set includes at least one piece of location information, each piece of location information in the second set identifies a location of the first reflecting surface on the spatial map, and the second set includes the second location information; and determining a ground truth of the location of the first reflecting surface on the spatial map through weighted averaging on the second set, and determining the confidence of the second location information based on the ground truth and the second location information.

In this way, the core network device can determine, through weighted averaging on the second set, the ground truth representing the location of the first reflecting surface on the spatial map, and can determine the confidence of the second location information based on a distance between the ground truth of the location and the second location information. In this way, the confidence of the second location information is more reliable, and the first apparatus or the core network device can perform localization or fingerprint database construction based on location information with higher confidence.

In a possible implementation, determining the confidence of the second location information includes: obtaining a second set, where the second set includes at least one piece of location information, each piece of location information in the second set identifies a location of the first reflecting surface on the spatial map, and the second set includes the second location information; and determining the confidence of the second location information based on a feedback count of the second location information in the second set.

In this way, the core network device can determine the confidence of the second location information based on the proportion of the feedback count of the second location information, so that the confidence of the second location information is more reliable (because a plurality of devices feed back same location information, confidence of the location information is higher than confidence of location information that is fed back for fewer times), and the first apparatus or the core network device can perform localization or fingerprint database construction based on the location information with the higher confidence.

In a possible implementation, the method further includes: sending second information, where the second information indicates the confidence of the second location information.

In this way, the first apparatus may determine, based on the confidence of the second location information, whether to obtain new location information identifying the location of the first reflecting surface on the spatial map. For example, when the confidence of the second location information is lower than a specific value, the first apparatus obtains new location information. When the confidence of the second location information is higher than or equal to a specific value, the first apparatus performs localization based on the second location information, or may construct a fingerprint database based on the second location information.

In a possible implementation, the confidence of the second location information is higher than or equal to a second value, and the method further includes: determining a fingerprint database based on the second location information, where the fingerprint database is for locating an apparatus; and the second value is predefined, or the second value is preconfigured.

In this way, the core network device can construct the fingerprint database based on location information with higher confidence or confidence higher than the second value, to improve the accuracy of locating the terminal device.

In a possible implementation, the confidence of the second location information is higher than the confidence of the first location information.

The core network device sends, to the first apparatus, the first information indicating the confidence of the first location information, so that the first apparatus performs location information iteration based on the first information, to obtain location information with higher confidence, and therefore the first apparatus can locate the terminal device or construct the fingerprint database based on the location information with higher confidence.

In a possible implementation, the method further includes: sending information about the spatial map.

In this way, the first apparatus may determine, based on the information about the spatial map, the location information identifying the location of the first reflecting surface on the spatial map.

According to a third aspect, a communication method is provided. The method includes: obtaining a channel measurement result of a first signal; determining first location information, where the first location information identifies a location of a first reflecting surface on a spatial map, and the first location information is determined based on the channel measurement result of the first signal and information about the spatial map; and determining confidence of the first location information.

An execution body of the solution in the third aspect may be a terminal device, a network device, or a core network device, or may be a module (for example, a chip system) of the terminal device, the network device, or the core network device, or may be a logical node, a logical module, or software that can implement all or a part of functions of the terminal device, the network device, or the core network device. This is not limited. For ease of description, an execution body configured to perform the solution in the third aspect is not limited below.

In this solution, the confidence of the first location information is determined, to help determine, based on whether the confidence of the first location information is higher than a specific value, whether localization or fingerprint database construction can be performed based on the first location information. For example, if the confidence of the first location information is higher than the specific value, localization or fingerprint database construction can be performed based on the first location information; or if the confidence of the first location information is lower than the specific value, it can be determined that new location information is to be determined. In this way, this application supports localization or fingerprint database construction based on location information with higher confidence or confidence higher than the specific value, to improve accuracy of locating a terminal device.

In a possible implementation, the confidence of the first location information is higher than or equal to a first value, and the method further includes: locating a terminal device based on the first location information. The first value is predefined, or the first value is preconfigured.

In this way, the terminal device can be located based on the first location information with confidence higher than the first value, to effectively improve the accuracy of locating the terminal device.

In a possible implementation, the confidence of the first location information is lower than or equal to a second value, and the method further includes: obtaining a channel measurement result of a second signal; determining second location information based on the channel measurement result of the second signal and the information about the spatial map, where the second location information identifies a location of the first reflecting surface on the spatial map; and determining confidence of the second location information. The second value is predefined, or the second value is preconfigured.

When the confidence of the first location information is lower than or equal to the second value, new location information identifying a location of the first reflecting surface on the spatial map can be determined. In this way, location information with higher confidence or location information that satisfies a specific requirement can be obtained, to improve the accuracy of locating the terminal device.

In a possible implementation, the confidence of the second location information is higher than or equal to a third value, and the method further includes: locating a terminal device based on the second location information.

In this way, the terminal device can be located based on the second location information with confidence higher than the third value, to effectively improve the accuracy of locating the terminal device.

In a possible implementation, the confidence of the first location information is lower than the confidence of the second location information.

The core network device sends, to the first apparatus, the first information indicating the confidence of the first location information, so that the first apparatus performs location information iteration based on the first information, to obtain location information with higher confidence, and therefore the first apparatus can locate the terminal device or construct the fingerprint database based on the location information with higher confidence.

In a possible implementation, a location of a transmit end of the first signal is located on the spatial map.

Both the location of the transmit end of the first signal and a location of the first apparatus are known. The first apparatus may determine the first location information based on the location of the transmit end of the first signal, the location of the first apparatus, the channel measurement result of the first signal, and information about the spatial map.

In a possible implementation, a location of a transmit end of the second signal is the same as the location of the transmit end of the first signal.

Because the location of the transmit end of the first signal is the same as the location of the transmit end of the second signal, the first apparatus can determine, based on the same location of the transmit ends of the signals, location information with higher confidence, to reduce impact of a measurement error on the confidence of the location information.

According to a fourth aspect, a communication apparatus is provided. The communication apparatus may be a first apparatus, or may be a device, a module, or the like configured to perform a function of the first apparatus.

In a possible implementation, the communication apparatus may include modules or units that perform the one-to-one corresponding methods/operations/steps/actions described in the first aspect. The module or unit may be implemented by a hardware circuit, software, or a combination of a hardware circuit and software.

The first apparatus may be a terminal device or a network device. This is not limited.

According to a fifth aspect, a communication apparatus is provided. The communication apparatus may be a core network device, or may be a device, a module, or the like configured to perform a function of the core network device.

In a possible implementation, the communication apparatus may include modules or units that perform the one-to-one corresponding methods/operations/steps/actions described in the second aspect. The module or unit may be implemented by a hardware circuit, software, or a combination of a hardware circuit and software.

According to a sixth aspect, a communication apparatus is provided. The communication apparatus may be a core network device/terminal device/network device, or may be a device, a module, or the like configured to perform a function of the core network device/terminal device/network device.

In a possible implementation, the communication apparatus may include modules or units that perform the one-to-one corresponding methods/operations/steps/actions described in the third aspect. The module or unit may be implemented by a hardware circuit, software, or a combination of a hardware circuit and software.

According to a seventh aspect, a communication apparatus is provided. The apparatus includes a processor. The processor is configured to enable, by executing a computer program or instructions or via a logic circuit, the communication apparatus to perform the method according to any one of the first aspect and the possible implementations of the first aspect; the communication apparatus to perform the method according to any one of the second aspect and the possible implementations of the second aspect; or the communication apparatus to perform the method according to any one of the third aspect and the possible implementations of the third aspect.

In a possible implementation, the communication apparatus further includes a memory. The memory is configured to store the computer program or the instructions.

In a possible implementation, the communication apparatus further includes a communication interface, and the communication interface is configured to input and/or output a signal.

According to an eighth aspect, a communication apparatus is provided. The apparatus includes a logic circuit and an input/output interface. The input/output interface is configured to input and/or output a signal; and the logic circuit is configured to perform the method according to any one of the first aspect and the possible implementations of the first aspect; or the logic circuit is configured to perform the method according to any one of the second aspect and the possible implementations of the second aspect; or the logic circuit is configured to perform the method according to any one of the third aspect and the possible implementations of the third aspect.

According to a ninth aspect, a computer-readable storage medium is provided. The computer-readable storage medium stores a computer program or instructions. When the computer program or the instructions are run on a computer, the method according to any one of the first aspect and the possible implementations of the first aspect is performed; or the method according to any one of the second aspect and the possible implementations of the second aspect is performed; or the method according to any one of the third aspect and the possible implementations of the third aspect is performed.

According to a tenth aspect, a computer program product including instructions is provided. When the instructions are run on a computer, the method according to any one of the first aspect and the possible implementations of the first aspect is performed; or the method according to any one of the second aspect and the possible implementations of the second aspect is performed; or the method according to any one of the third aspect and the possible implementations of the third aspect is performed.

According to an eleventh aspect, a chip system is provided. The chip system includes a processor. The processor is configured to execute a computer program or instructions in a memory, to enable the chip system to implement the method according to any one of the first aspect and the possible implementations of the first aspect, the method according to any one of the second aspect and the possible implementations of the second aspect, or the method according to any one of the third aspect and the possible implementations of the third aspect.

### BRIEF DESCRIPTION OF DRAWINGS

FIG. 1 is a diagram of an application framework 100 in a communication system according to an embodiment of this application;
FIG. 2 is a diagram of an application framework 200 in a communication system according to an embodiment of this application;
FIG. 3 is a diagram of a communication system 300 to which an embodiment of this application is applicable;
FIG. 4 is a diagram of a communication system 400 to which an embodiment of this application is applicable;
FIG. 5 is a diagram of a communication system 500 to which an embodiment of this application is applicable;
FIG. 6 is a diagram of a communication system 600 to which an embodiment of this application is applicable;
FIG. 7 is a diagram of fingerprint-based localization 700 according to an embodiment of this application;
FIG. 8 is a schematic interaction flowchart of a communication method 800 according to an embodiment of this application;
FIG. 9 is a schematic interaction flowchart of a communication method 900 according to an embodiment of this application;
FIG. 10A and FIG. 10B are a schematic interaction flowchart of a communication method 1000 according to an embodiment of this application;
FIG. 11 is a diagram of a communication apparatus 1100 according to an embodiment of this application; and
FIG. 12 is a diagram of a communication apparatus 1200 according to an embodiment of this application.

### DESCRIPTION OF EMBODIMENTS

For ease of understanding of embodiments of this application, the following several descriptions are provided first.
1. In this application, unless otherwise specified, "a plurality of" means two or more.
2. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.
3. Various numbers in this application are distinguished for ease of description, but are not intended to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other term numerals (if exists) are intended to distinguish between similar objects, but do not necessarily indicate a specific order or sequence. Data used in such a way is interchangeable in appropriate circumstances, so that embodiments described herein can be implemented in other orders than the order illustrated or described herein.
   In addition, any embodiment or design solution described as an "example" or "for example" in this application should not be explained as being more preferred or having more advantages than another embodiment or design solution. Specifically, the words such as "example" or "for example" are used to present a related concept in a specific manner for ease of understanding.
4. The terms "include", "have", and any variants thereof are intended to cover a non-exclusive inclusion. For example, a process, method, system, product, or device that includes a series of steps or units is not necessarily limited to those expressly listed steps or units, but may include other steps or units not expressly listed or inherent to such a process, method, product, or device.
5. In this application, "indicate" may be understood as "enable", and "enable" may include "directly enable" and "indirectly enable". When a piece of information is described to enable A, the information may directly enable A or indirectly enable A, but it does not mean that the information definitely carries A.
   Information enabled by the information is referred to as to-be-enabled information. In a specific implementation process, the to-be-enabled information may be enabled in many manners, for example, but not limited to, the to-be-enabled information may be directly enabled, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, so as to reduce enabling overheads to some extent. In addition, a common part of all information may be identified and enabled in a unified manner, so as to reduce enabling overheads caused by enabling the same information separately.
6. In this application, "preconfigure" may include "predefine", for example, define in a protocol. The "predefine" may be implemented by prestoring, in a device (for example, including network elements), corresponding code, a corresponding table, or other related information that may be used for indication. A specific implementation thereof is not limited in this application.
7. "Storage" or "store" in this application may mean "being stored" in one or more memories. The one or more memories may be separately disposed, or may be integrated into an encoder, a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited.
8. The "protocol" in this application may be a standard protocol in the communication field, for example, may include a 4^{th} generation (4^{th} generation, 4G) network protocol, a 5^{th} generation (5^{th} generation, 5G) network protocol, a new radio (new radio, NR) protocol, a 5.5G network protocol, a 6^{th} generation (6^{th} generation, 6G) network protocol, and a related protocol applied to a future communication system. This is not limited in this application.
9. Arrows or blocks shown by dashed lines in diagrams of the accompanying drawings in this specification of this application indicate optional steps or optional modules.
10. In this application, unless otherwise specified, "/" indicates an "or" relationship between associated objects. For example, A/B may indicate A or B. "And/or" in this application describes only an association relationship for describing associated objects and indicates that three relationships may exist. For example, A and/or B may indicate the following three cases: Only A exists, both A and B exist, and only B exists, where A and B may be singular or plural.
11. In embodiments of this application, an indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured. In addition, in embodiments of this application, that information C is for determining information D includes that the information D is determined based on only the information C, and the information D is determined based on the information C and other information. In addition, that the information C is for determining the information D may further include an indirect determining case. For example, the information D is determined based on information E, and the information E is determined based on the information C.
12. That "a network element A (which may be a device A) sends information A to a network element B (which may be a device B)" in embodiments of this application may be understood as that a destination end of the information A or an intermediate network element in a transmission path to the destination end is the network element B, and may include directly or indirectly sending the information to the network element B. That "a network element B receives information A from a network element A" may be understood as that a source end of the information A or an intermediate network element in a transmission path between the network element B and the source end is the network element A, and may include directly or indirectly receiving the information from the network element A. Information may undergo necessary processing, for example, a format change, between a source end for sending the information and a destination end. However, the destination end may understand valid information from the source end. Similar descriptions in this application may be understood similarly, and details are not described herein.

First, a communication system to which an embodiment of this application is applicable is described.

The technical solutions provided in this application may be applied to various communication systems, for example, a 5G or NR system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system like a 6G mobile communication system, or a convergence system of a plurality of systems. The technical solutions provided in this application may also be applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), and internet-of-things (internet-of-things, IoT) communication systems, or other communication systems.

A device in the communication system may send a signal to another device or receive a signal from another device. The signal may include information, signaling, data, or the like. The device may alternatively be replaced with an entity, a network entity, a network element, a communication device, a communication module, a node, user equipment, a mobile device, a communication node, or the like. In this embodiment of this application, the device is used as an example for description. For example, the communication system may include at least one terminal device and at least one network device. The network device may send a downlink signal to the terminal device, and/or the terminal device may send an uplink signal to the network device. It may be understood that the terminal device in embodiments of this application may be replaced with a first device, the network device may be replaced with a second device, and the terminal device and the network device perform a corresponding communication method in embodiments of this application.

The terminal device in embodiments of this application may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data, for example, a handheld device or a vehicle-mounted device with a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, a terminal device in a future evolved public land mobile communication network (public land mobile network, PLMN), or the like. This is not limited in embodiments of this application.

By way of an example but not a limitation, in embodiments of this application, the terminal device may alternatively be a wearable device. The wearable device may also be referred to as a wearable intelligent device, and is a generic term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to operate with other devices such as smartphones, such as various smart bands or smart jewelry for monitoring physical signs.

In this embodiment of this application, an apparatus configured to implement a function of the terminal device may be the terminal device, or may be an apparatus that can support the terminal device in implementing the function, such as a chip system, where the apparatus may be installed in the terminal device or used in matching with the terminal device. In this embodiment of this application, the chip system may include a chip, or may include a chip and another discrete component. In embodiments of this application, that the apparatus configured to implement the function of the terminal device is a terminal device is merely used as an example for description, and constitutes no limitation on the solutions in embodiments of this application.

The network device in embodiments of this application may be a device configured to communicate with the terminal device. The network device may also be referred to as an access network device or a radio access network device. For example, the network device may be a base station. In embodiments of this application, the network device may be a radio access network (radio access network, RAN) node (or device) that enables the terminal device to access a wireless network. The base station may be broadly covered by various names in the following or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master station, a secondary station, a multimode radio (multimode radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), a positioning node, a RAN intelligent controller (RAN intelligent controller, RIC), and the like. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). Neither of a specific technology and a specific device form used by the network device is limited in embodiments of this application.

The base station may be fixed or mobile. For example, a helicopter or an uncrewed aerial vehicle may be configured as a mobile base station, and one or more cells may move based on a location of the mobile base station. In another example, a helicopter or an uncrewed aerial vehicle may be configured to serve as a device for communicating with another base station.

In some deployments, the network device mentioned in embodiments of this application may be a CU, or a DU, or a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In different communication systems, the CU (or the CU-CP and the CU-UP), the DU, or the RU may have different names, but a person skilled in the art may understand meanings thereof. For example, in an open RAN (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented via a software module, a hardware module, or a combination of a software module and a hardware module.

In some deployments, a plurality of RAN nodes coordinate to assist the terminal in implementing radio access, and different RAN nodes respectively implement some functions of a base station. For example, the RAN node may be a CU, a DU, a CU-CP, a CU-UP, or an RU. The CU and the DU may be separately arranged, or may be included in a same network element, for example, a BBU. The RU may be included in a radio frequency device or a radio unit, for example, included in an RRU, an AAU, or an RRH.

The RAN node may support one or more types of fronthaul interfaces, and different fronthaul interfaces respectively correspond to DUs and RUs having different functions. If a fronthaul interface between a DU and an RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, some downlink and/or uplink baseband functions are moved from the DU to the RU for implementation. For example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix (cyclic prefix, CP) removal are moved from the DU to the RU for implementation.

In a possible implementation, the interface may be an enhanced common public radio interface (enhanced common public radio interface, eCPRI). In an eCPRI architecture, split manners of the DU and RU are different, and correspond to different categories (category, Cat) of eCPRIs, such as eCPRI Cat A, B, C, D, E, and F.

The eCPRI Cat A is used as an example. For downlink transmission, with layer mapping as a splitting point, the DU is configured to implement the layer mapping and one or more preceding functions (to be specific, one or more of encoding, rate matching, scrambling, modulation, or layer mapping), and another function (for example, one or more of RE mapping, BF, or IFFT/CP) after the layer mapping is moved to the RU for implementation. For uplink transmission, splitting is performed at RE demapping. The DU is configured to implement the demapping and one or more preceding functions (to be specific, one or more of decoding, rate de-matching, descrambling, demodulation, inverse discrete Fourier transform (inverse discrete Fourier transform, IDFT), channel equalization, or RE demapping), and another function (for example, one or more of digital BF, fast Fourier transform (fast Fourier transform, FFT), or CP removal) after the demapping is moved to the RU for implementation. It may be understood that, for function descriptions of DUs and RUs corresponding to various categories of eCPRIs, refer to the eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In embodiments of this application, an apparatus configured to implement a function of a network device may be a network device, or may be an apparatus that can support the network device in implementing the function, for example, a chip system, a hardware circuit, a software module, or a combination of a hardware circuit and a software module. The apparatus may be installed in the network device or used in combination with the network device. In embodiments of this application, that the apparatus for implementing the function of the network device is a network device is merely used as an example for description, and constitutes no limitation on the solutions in embodiments of this application.

The network device and/or the terminal device may be deployed on the land, including an indoor device, an outdoor device, a handheld device, or a vehicle-mounted device; may be deployed on the water; or may be deployed on an airplane, a balloon, and a satellite in the air. A scenario in which the network device and the terminal device are located is not limited in embodiments of this application. In addition, the terminal device and the network device may be hardware devices; may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

In a wireless communication network, for example, in a mobile communication network, services supported by the network are increasingly diversified, and therefore requirements that need to be satisfied are increasingly diversified. For example, the network needs to be capable of supporting an ultra-high rate, an ultra-low latency, and/or massive connections. This feature makes network planning, network configuration, and/or resource scheduling increasingly complex. In addition, because network functions are increasingly powerful, for example, supporting higher spectrums and new technologies such as a high-order multiple-input multiple-output (multiple-input multiple-output, MIMO) technology, beamforming, and/or beam management, network energy saving has become a hot research topic. These new requirements, scenarios, and features cause unprecedented challenges to network planning, operation and maintenance, and efficient operation. To meet this challenge, an artificial intelligence technology may be introduced into the wireless communication network, to implement network intelligence.

To support an artificial intelligence (artificial intelligence, AI) technology in a wireless network, an AI node may be further introduced in the network.

Optionally, the AI node may be deployed at one or more of the following locations in the communication system: an access network device, a terminal device, a core network device, or the like. Alternatively, the AI node may be independently deployed, for example, deployed at a location other than any one of the foregoing devices, for example, a host or a cloud server in an over-the-top (over-the-top, OTT) system. The AI node may communicate with another device in the communication system. For example, the another device may be one or more of the following: a network device, a terminal device, a network element of a core network, or the like.

It may be understood that, a quantity of AI nodes is not limited in embodiments of this application. For example, when there are a plurality of AI nodes, the plurality of AI nodes may be divided based on functions. For example, different AI nodes are responsible for different functions.

It may be further understood that, the AI nodes may be independent devices, may be integrated into a same device to implement different functions, may be network elements in a hardware device, may be software functions running on dedicated hardware, or may be virtualized functions instantiated on a platform (for example, a cloud platform). A specific form of the AI node is not limited in this application. The AI node may be an AI network element or an AI module.

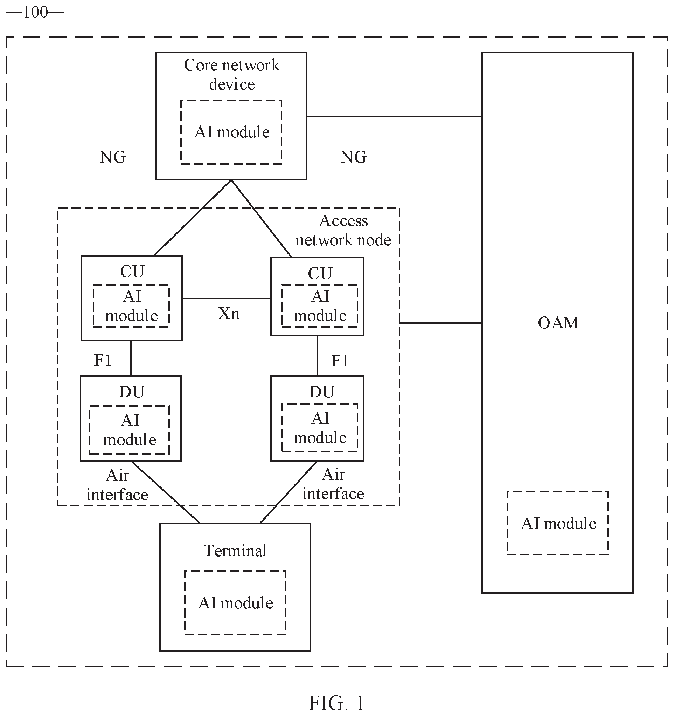

FIG. 1 is a diagram of an application framework 100 in a communication system according to an embodiment of this application. As shown in FIG. 1, network elements in the communication system are connected through an interface (for example, NG or Xn) or an air interface. One or more AI modules (for clarity, FIG. 1 shows only one AI module) are disposed in one or more of these network element nodes, such as a core network device, an access network node (RAN node), a terminal, or operation, administration, and maintenance (operation, administration, and maintenance, OAM). The access network node may be used as an independent RAN node, or may include a plurality of RAN nodes, for example, include a CU and a DU. One or more AI modules may also be disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of the following: a quantity of layers of a neural network, a width of the neural network, a connection relationship between layers, a weight value of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One model may obtain one output through inference, where the output includes one or more parameters. Learning processes, training processes, or inference processes of different models may be deployed in different nodes or devices, or may be deployed in a same node or device.

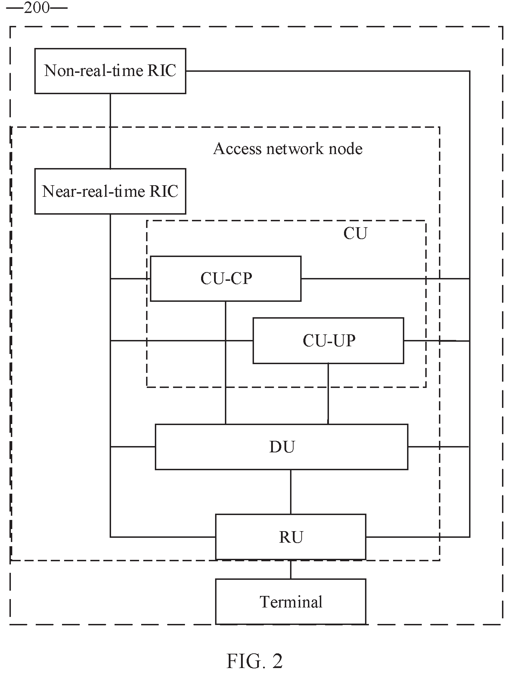

FIG. 2 is a diagram of an application framework 200 in a communication system according to an embodiment of this application. As shown in FIG. 2, the communication system includes a RAN intelligent controller (RAN intelligent controller, RIC). For example, the RIC may be AI modules 117 and 118 shown in FIG. 1, and is configured to implement an AI-related function. The RIC includes a near-real-time RIC (near-real-time RIC, near-RT RIC) and a non-real-time RIC (non-real-time RIC, Non-RT RIC). The non-real-time RIC mainly processes non-real-time information, for example, latency-insensitive data. Latency of the data may be at a granularity of seconds. A real-time RIC mainly processes near-real-time information, for example, latency-sensitive data. Latency of the data is at a granularity of tens of milliseconds.

The near-real-time RIC is configured to perform model training and inference, for example, is configured to train an AI model and perform inference by using the AI model. The near-real-time RIC may obtain information on a network side and/or a terminal side from a RAN node (for example, a CU, a CU-CP, a CU-UP, a DU, and/or an RU) and/or a terminal. The information may be used as training data or inference data. Optionally, the near-real-time RIC may deliver an inference result to the RAN node and/or the terminal. Optionally, the inference result may be exchanged between the CU and the DU and/or between the DU and the RU. For example, the near-real-time RIC delivers the inference result to the DU, and the DU sends the inference result to the RU.

The non-real-time RIC is also configured to perform model training and inference, for example, is configured to train an AI model and perform inference by using the model. The non-real-time RIC may obtain information on a network side and/or a terminal side from a RAN node (for example, a CU, a CU-CP, a CU-UP, a DU, and/or an RU) and/or a terminal. The information may be used as training data or inference data, and an inference result may be delivered to the RAN node and/or the terminal. Optionally, the inference result may be exchanged between the CU and the DU and/or between the DU and the RU. For example, the non-real-time RIC delivers the inference result to the DU, and the DU sends the inference result to the RU.

Alternatively, the near-real-time RIC and the non-real-time RIC may be separately disposed as network elements. Optionally, the near-real-time RIC and the non-real-time RIC may alternatively serve as a part of another device. For example, the near-real-time RIC is deployed on the RAN node (for example, the CU or the DU), and the non-real-time RIC is deployed on an OAM, a cloud server, a core network device, or another network device.

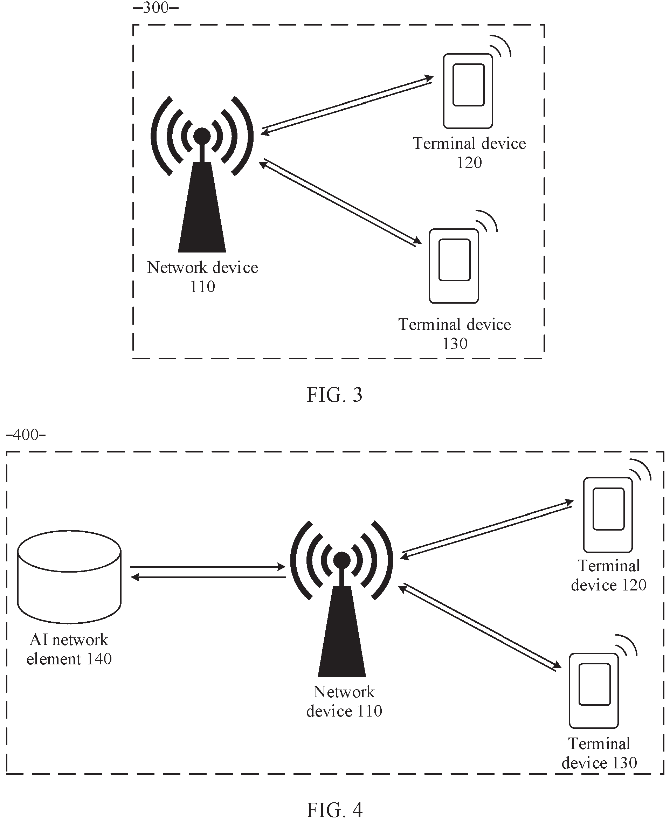

FIG. 3 is a diagram of a communication system 300 to which an embodiment of this application is applicable. As shown in FIG. 3, the communication system 300 may include at least one network device, for example, a network device 110. The communication system 300 may further include at least one terminal device, for example, a terminal device 120 and a terminal device 130. The network device 110 may communicate with the terminal device (for example, the terminal device 120 and the terminal device 130) through a radio link. Communication devices, for example, the network device 110 and the terminal device 120, in the communication system may communicate with each other by using a multiple-antenna technology.

FIG. 4 is a diagram of a communication system 400 to which an embodiment of this application is applicable. Compared with the communication system 300, the communication system 400 further includes an AI network element 140. The AI network element 140 is configured to perform an AI-related operation, for example, constructing a training dataset or training an AI model.

In a possible implementation, the network device 110 may send data related to training of the AI model to the AI network element 140, and the AI network element 140 constructs the training dataset and trains the AI model. For example, the data related to the training of the AI model may include data reported by a terminal device. The AI network element 140 may send a result of an operation related to the AI model to the network device 110, and the network device 110 forwards the result of the operation related to the AI model to the terminal device. For example, the result of the operation related to the AI model may include at least one of the following: a trained AI model, an evaluation result or a test result for the model, or the like. For example, a part of the trained AI model may be deployed on the network device 110, and the other part is deployed on the terminal device. Alternatively, the trained AI model may be deployed on the network device 110. Alternatively, the trained AI model may be deployed on the terminal device.

It should be noted that in FIG. 4, that the AI network element 140 is directly connected to the network device 110 is merely used as an example for description. In another scenario, the AI network element 140 may alternatively be connected to the terminal device. Alternatively, the AI network element 140 may be connected to both the network device 110 and the terminal device. Alternatively, the AI network element 140 may be connected to the network device 110 via a third-party network element. A connection relationship between the AI network element and another network element is not limited in embodiments of this application.

The AI network element 140 may alternatively be disposed on a network device and/or a terminal device as a module, for example, disposed on the network device 110 or the terminal device shown in FIG. 3.

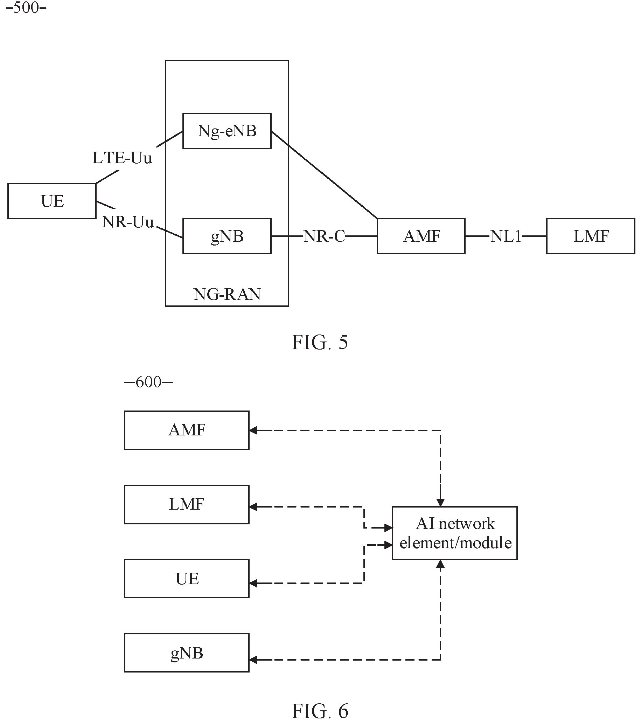

FIG. 5 is a diagram of a communication system 500 to which an embodiment of this application is applicable. As shown in FIG. 5, a 5G NR system is used as an example. Network elements in this embodiment of this application are shown in FIG. 5. UE is a mobile terminal. A gNB and an ng-eNB are a 5G base station and a 4G base station that can access a 5G core network, respectively. Both of the gNB and the ng-eNB are network elements of a next-generation radio access network NG-RAN. An AMF is an access and mobility management function (access and mobility management function, AMF) network element. An LMF is a location management function (location management function, LMF) network element. The UE communicates with the gNB through an NR-Uu interface, the UE communicates with the ng-eNB through an LTE-Uu interface, and both the NR-Uu interface and the LTE-Uu interface may be used for transmission of localization-related signaling. An NG-C interface is used for communication between the gNB and the AMF and between the ng-eNB and the AMF, and may be used for transmission of localization-related signaling. An NL1 interface is used for communication between the AMF and the LMF, and may be used for transmission of localization-related signaling.

Interaction between the UE and the LMF is based on an LTE positioning protocol (LTE positioning protocol, LPP). An LPP message is transmitted across an intermediate network interface by using an appropriate protocol as a transparent protocol data unit, for example, transmitted through an NG-C interface by using an NG application protocol (NG application protocol, NGAP), and transmitted through an LTE-Uu and NR-Uu by using a non-access stratum (non-access stratum, NAS)/radio resource control (radio resource control, RRC) protocol. Interaction between the NG-RAN and the LMF is based on an NR positioning protocol A (NR Positioning Protocol A, NRPPa) protocol, and the NRPPa protocol is used for transparent transmission across the AMF.

FIG. 6 is a diagram of a communication system 600 to which an embodiment of this application is applicable. To support a machine learning function in a wireless network, a dedicated AI network element or module may be further introduced in the network. If an AI network element is introduced, the AI network element corresponds to an independent network element. If an AI module is introduced, the AI module may be located in a network element, and the corresponding network element may be an AMF, an LMF, a gNB, UE, or the like. As shown in FIG. 6, the AI network element or module may collect data from one or more of network elements such as the UE, the gNB, the AMF, and the LMF, and/or forward an AI model to one or more of these network elements.

It should be noted that, FIG. 3 to FIG. 6 are merely simplified diagrams of examples for ease of understanding. For example, the communication system may further include another device, for example, may further include a wireless relay device and/or a wireless backhaul device, which are/is not shown in FIG. 3 to FIG. 6. In actual application, the communication system may include a plurality of network devices (for example, the network device 110 and a network device 150 (not shown in FIG. 3)), or may include a plurality of terminal devices. Quantities of network devices and terminal devices included in the communication system are not limited in embodiments of this application.

Then, a part of technical concepts in this application are briefly described.

Machine learning (machine learning, ML): The ML is an important technical approach for implementing AI, and may be classified into supervised learning, unsupervised learning, and reinforcement learning.

In terms of the supervised learning, based on collected sample values and sample labels, a mapping relationship between the sample values and the sample labels is learned by using an ML algorithm, and the learned mapping relationship is expressed by using an ML model. A process of training the ML model is a process of learning the mapping relationship. For example, during signal detection, a received signal including noise is a sample, and a ground-truth constellation point corresponding to the signal is a label. The ML expects to learn a mapping relationship between the sample and the label through training, that is, enable an ML model to learn a signal detector. During training, a model parameter is optimized by computing an error between a predicted value of a model and a ground-truth label. Once the mapping relationship is learned, a sample label of each new sample can be predicted by using the learned mapping. The mapping relationship learned through supervised learning may include linear mapping and non-linear mapping. A learning task may be classified into a classification task and a regression task based on a type of a label.

In terms of unsupervised learning, an internal pattern of a sample is explored autonomously by using an algorithm based on only a collected sample value. For a specific type of algorithm of the unsupervised learning, a sample is used as a supervised signal. In other words, a model learns a mapping relationship between samples, which is referred to as self-supervised learning. During training, a model parameter is optimized by computing an error between a predicted value of the model and the sample. The self-supervised learning may be used for signal compression and decompression restoration. Common algorithms include an autoencoder, a generative adversarial network, and the like.

Reinforcement learning is different from supervised learning, and is an algorithm that learns a strategy of resolving problems by interacting with an environment. Unlike supervised learning and unsupervised learning, reinforcement learning lacks clear "correct" action label data. The algorithm needs to interact with the environment to obtain a reward signal fed back by the environment and adjust a decision action to obtain a higher reward signal value. For example, in downlink power control, a reinforcement learning model adjusts a downlink transmit power of each user based on total system throughput fed back by a wireless network, to obtain higher system throughput. The goal of reinforcement learning is also to learn a mapping relationship between an environment status and an optimal decision action. However, a label of a "correct action" cannot be obtained in advance. Therefore, a network cannot be optimized by computing an error between an action and the "correct action". Reinforcement learning training is implemented through iterative interaction with the environment.

A deep neural network (deep neural network, DNN) is a specific implementation of ML. According to a universal approximation theorem, the neural network can approximate any continuous function in theory, so that the neural network has a capability of learning any mapping. In a conventional communication system, a communication module needs to be designed with rich expert knowledge. However, a DNN-based deep learning communication system can automatically discover an implicit pattern structure from a large quantity of datasets, establish a mapping relationship between data, and obtain performance better than that of a conventional modeling method.

Based on a network construction manner, the DNN may be classified into a feedforward neural network (feedforward neural network, FNN), a convolutional neural network (convolutional neural network, CNN), and a recurrent neural network (recurrent neural network, RNN).

The CNN is a neural network dedicated to processing data of a similar grid structure. For example, both time series data (timeline discrete sampling) and image data (two-dimensional discrete sampling) may be considered as the data of the similar grid structure. The CNN performs a convolution operation by capturing partial information through a window with a fixed size, instead of performing an operation based on all input information at one time. This greatly reduces an amount of model parameter computation. In addition, a convolution kernel operation used by each window may vary depending on a type of information captured through the window (for example, a person and an object in a same image are information of different types), so that the CNN can better extract a feature of input data.

The RNN is a DNN network using feedback time series information. Inputs of the RNN include a new input value at a current moment and an output value of the RNN at a previous moment. The RNN is suitable for obtaining a sequence feature having a time correlation, and is especially suitable for applications such as speech recognition and channel encoding and decoding.

The foregoing FNN, CNN, and RNN are common neural network structures, and these network structures are constructed based on neurons. As described above, each neuron performs a weighted summation operation on input values of the neuron, and outputs a weighted summation result through a non-linear function. In this case, a weight value of the weighted summation operation of the neuron in the neural network and the non-linear function are referred to as parameters of the neural network. A neuron in which max{0, x} is a nonlinear function is used as an example. Parameters of the neuron that performs a $max \left\{0, {\sum }_{i = 0}^{n} {w}_{i} {x}_{i} + b\right\}$ operation are a weight value **w** = [w₀, ..., wₙ] , a weighted summation bias b, and the nonlinear function max{0, x}. Parameters of all neurons of a neural network constitute parameters of the neural network.

AI model: The AI model is an algorithm or a computer program that can implement an AI function. The AI model represents a mapping relationship between an input and an output of the model. A type of the AI model may be a neural network, a linear regression model, a decision tree model, a support vector machine (support vector machine, SVM), a Bayesian network, a Q-learning model, or another ML model.

The AI model or the AI function may be implemented via a hardware circuit, software, or a combination of software and hardware. This is not limited. A non-limitative example of the software includes program code, a program, a subprogram, an instruction, an instruction set, code, a code segment, a software module, an application, a software application, or the like.

Fingerprint: As multipath propagation of a signal depends on an environment, a multipath structure of a channel at each location is unique. A radio wave transmitted by a terminal device is reflected and refracted, generating multipath signals that are highly environment-dependent. Information carried in the multipath signals may be referred to as fingerprint information or a fingerprint of the location.

Fingerprint database: is a set including fingerprint information of one or more locations and corresponding location information.

Fingerprint-based localization: A terminal device is located based on fingerprint information of the terminal device.

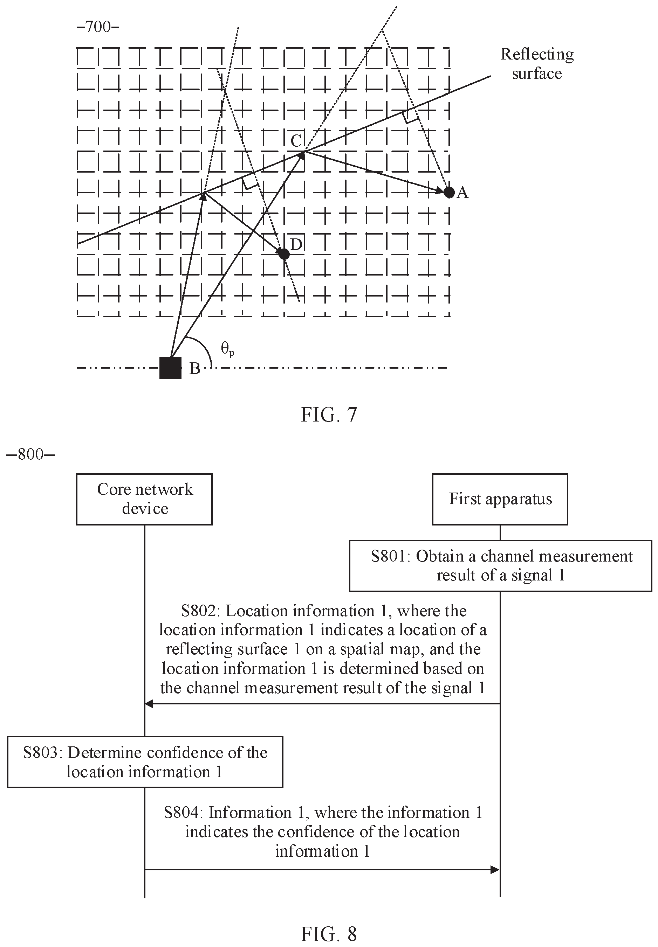

For further descriptions of fingerprint-based localization, refer to FIG. 7.

FIG. 7 is a diagram of fingerprint-based localization 700 according to an embodiment of this application. As shown in FIG. 7, a terminal device is deployed at a location A, and a network device is deployed at a location B. Both the location of the terminal device and the location of the network device are known. The terminal device whose location is known may be referred to as a positioning reference unit (positioning reference unit, PRU). The known location may be preset, or may be reported by the terminal device. This is not limited herein. The network device sends a non-line-of-sight (non-line-of-sight, NLOS) signal to the terminal device, and a transmission path of the non-line-of-sight signal is BC→CA. The terminal device measures the non-line-of-sight signal, to obtain an AoA and a ToA of the non-line-of-sight signal. The terminal device determines a propagation distance (BC+CA) of the non-line-of-sight signal based on the ToA. The terminal device determines an included angle between BC and a horizontal plane based on the AoA, determines a location of a reflecting surface based on a geometric relationship shown in FIG. 7, and determines, based on the reflecting surface, an AoA and a ToA corresponding to another location, for example, an AoA and a ToA of a location D. The network device may determine fingerprint information (for example, the AoA and the ToA) of another location based on the reflecting surface, and determine a location of a terminal device based on the fingerprint information.

Determining one reflecting surface is used as an example for description in FIG. 7 rather than a limitation on an application scenario of determining a plurality of reflecting surfaces. Fingerprint information of each location may vary depending on different reflecting surfaces. During AI model training, a plurality of fingerprint databases may be constructed based on a plurality of reflecting surfaces, to implement better localization. For ease of description, this embodiment of this application is described by using an example in which a fingerprint database is constructed or localization is performed based on one reflecting surface, but there is no limitation on an application scenario of constructing a plurality of fingerprint databases or performing localization based on a plurality of reflecting surfaces.

An AI model may be applied to improve localization accuracy. For example, several channel response features are used as an input of the AI model, to output a location of a terminal device. The AI model may be deployed on an LMF side. The terminal device or a network device sends the channel response features to the LMF, and the LMF uses the channel response features as the input of the AI model, and outputs the location of the terminal device.

Uplink localization is used as an example. A terminal device sends an SRS to a network device, and the network device obtains a channel response feature of the SRS. If the AI model is deployed on an LMF side, the network device sends the channel response feature to the LMF, and the LMF uses channel response features from a plurality of network devices as an input of the AI model, and outputs location information of the terminal device.

Currently, a terminal device may be located by using an AI-based localization method. For example, AI-based localization is performed based on a fingerprint database. For example, the fingerprint database is constructed in a manner shown in FIG. 7, and the terminal device is located based on the fingerprint database. However, a localization result obtained by using an existing fingerprint database-based localization method cannot satisfy requirements of high-accuracy localization.

In view of this, this application provides a communication method and a communication apparatus, to improve accuracy of locating a terminal device.

For ease of understanding and description, the following describes the communication method in embodiments of this application by using interaction between a first apparatus, a second apparatus, and a core network device as an example. However, this shall not constitute any limitation on an execution body of the communication method in embodiments of this application. For example, the method performed by the first apparatus may alternatively be performed by a module (for example, a circuit, a chip, or a chip system) of the first apparatus, or may be performed by a logical node, a logical module, or software that can implement all or a part of functions of the first apparatus. The method performed by the second apparatus may be performed by a module (for example, a circuit, a chip, or a chip system) of the second apparatus, or may be implemented by a logical node, a logical module, or software that can implement all or a part of functions of the second apparatus. The method performed by the core network device may be performed by a module (for example, a circuit, a chip, or a chip system) of the core network device, or may be implemented by a logical node, a logical module, or software that can implement all or a part of functions of the core network device.

The apparatus may be a communication device, a device, a component in a device, a chip system, or the like. This is not limited. For example, the first apparatus may be a first device, a first component, a first chip, or the like, and the second apparatus may be a second device, a second component, a second chip, or the like.

In a possible implementation, the first apparatus may be a terminal device or a network device, and the second apparatus may be a terminal device or a network device. For example, the first apparatus is a terminal device, and the second apparatus is a terminal device. For example, the first apparatus is a terminal device, and the second apparatus is a network device. For example, the first apparatus is a network device, and the second apparatus is a terminal device. This is not limited.

When both the first apparatus and the second apparatus are terminal devices, communication between the first apparatus and the second apparatus is sidelink communication. When the first apparatus is a network device and the second apparatus is a terminal device, communication between the first apparatus and the second apparatus is air interface communication or Uu interface communication. When the first apparatus is a terminal device and the second apparatus is a network device, communication between the first apparatus and the second apparatus is air interface communication or Uu interface communication. It may be understood that the terminal device may be a PRU.

FIG. 8 is a schematic interaction flowchart of a communication method 800 according to an embodiment of this application. As shown in FIG. 8, the method includes the following steps.

S801: A first apparatus obtains a channel measurement result of a signal 1 (for example, a first signal).

For example, the first apparatus receives the signal 1 sent by a second apparatus, measures the signal 1, and obtains the channel measurement result of the signal 1.

For example, the first apparatus sends the signal 1 to the second apparatus, and the second apparatus measures the signal 1, obtains the channel measurement result of the signal 1, and sends the channel measurement result of the signal 1 to the first apparatus.

For example, another apparatus (for example, a third apparatus) sends the signal 1 to the second apparatus, and the second apparatus measures the signal 1, obtains the channel measurement result of the signal 1, and sends the channel measurement result of the signal 1 to the first apparatus.

In conclusion, a manner or a method for the first apparatus to obtain the channel measurement result of the signal 1 is not limited in this embodiment of this application.

In a possible implementation, the channel measurement result of the signal 1 includes an AoA and a ToA that correspond to the signal 1. For descriptions of how to obtain the AoA and the ToA by measuring the signal 1, refer to an existing standard. Details are not described.

When both the first apparatus and the second apparatus are terminal devices, the signal 1 may be a sidelink (sidelink, SL) positioning reference signal (positioning reference signal, PRS). When the first apparatus is a network device and the second apparatus is a terminal device, the signal 1 may be an SRS.

S802: The first apparatus sends location information 1 (for example, first location information) to a core network device.

Correspondingly, the core network device receives the location information 1.

For example, the first apparatus may determine the location information 1 based on the channel measurement result of the signal 1 and information (for example, a length and a width) about a spatial map (for constructing a virtual space shown in FIG. 7). For a process in which the first apparatus determines the location information 1 based on the channel measurement result of the signal 1, refer to the descriptions of FIG. 7. Details are not described again.

The location information 1 can identify, indicate, or represent a location of a reflecting surface 1 (for example, a first reflecting surface) on the spatial map. In an example, the location information 1 is represented by coordinates of two endpoints of a line segment in a two-dimensional plane, for example, [{x1, y1}, {x2, y2}], where x1≠x2, and y1≠y2. The reflecting surface 1 is a reflecting surface in a generic sense. In addition, the reflecting surface may alternatively be a surface (for example, the surface may be a surface, a profile, a cross section, or a section, which is not limited) of an object that is on the spatial map and whose material has a scattering characteristic.

In the foregoing description, the spatial map may be a two-dimensional map (for example, the virtual space shown in FIG. 7), or may be a three-dimensional map. If the spatial map is a three-dimensional map, a plurality of two-dimensional maps (the plurality of two-dimensional maps may be combined into one three-dimensional space) may be determined based on the three-dimensional map. A determining manner may include: determining the two-dimensional map based on a top view of the three-dimensional map, determining the two-dimensional map based on a side view of the three-dimensional map, and/or the like. For ease of description, the following uses an example in which the spatial map is a two-dimensional map (refer to the virtual space shown in FIG. 7).

S803: The core network device determines confidence of the location information 1.

The confidence of the location information 1 may be understood as reliability of the location information 1, or may be understood as a distance between the location information 1 and a location ground truth (the ground truth may be determined by the spatial map, or may be determined by the core network device) of the reflecting surface 1. For example, shorter Euclidean distances between endpoints (for example, two endpoints of the location information 1, for example, a coordinate point 1 {x1, y1} and a coordinate point 2 {x2, y2}) and two endpoints of the location ground truth (the endpoint may be understood as a coordinate point representing location information) (for details, refer to descriptions in Table 1) indicate higher confidence, and longer Euclidean distances indicate lower confidence. Alternatively, it may be understood as that the confidence is associated with a feedback count of the location information 1. For descriptions of how the core network device determines the confidence of the location information 1, refer to Table 1 and the following descriptions.

**Table 1**

| | |
|---|---|
| Location information a1 | [{x1, y1}, {x2, y2}] |
| Location information a2 | [{x3, y3}, {x4, y4}] |
| Location information a3 | [{x5, y5}, {x6, y6}] |
| Location information a4 | [{x7, y7}, {x8, y8}] |
| Location information a5 | [{x9, y9}, {x10, y10}] |
| Location information a1 | [{x1, y1}, {x2, y2}] |
| Location information a1 | [{x1, y1}, {x2, y2}] |
| Location information a5 | [{x9, y9}, {x10, y10}] |

As shown in Table 1, the core network device receives eight pieces of location information, and each of the eight pieces of location information represents or identifies a location of the reflecting surface 1 on the spatial map. A feedback count of the location information a1 (which may be represented as the location information 1) is 3, a feedback count of the location information a2 is 1, an occurrence count of the location information a3 is 1, an occurrence count of the location information a4 is 1, and an occurrence count of the location information a5 is 2.

In a possible implementation, the core network device may determine confidence based on an occurrence count of location information. For example, the core network device determines, based on the feedback count of 3 of the location information a1, that confidence of the location information a1 is 0.375 (=3/8); the core network device determines, based on the feedback count of 1 of the location information a2, that confidence of the location information a2 is 0.125 (=1/8); the core network device determines, based on the feedback count of 1 of the location information a3, that confidence of the location information a3 is 0.125 (=1/8); the core network device determines, based on the feedback count of 1 of the location information a4, that confidence of the location information a4 is 0.125 (=1/8); and the core network device determines, based on the feedback count of 2 of the location information a5, that confidence of the location information a5 is 0.25 (=2/8).

In a possible implementation, that the core network device determines the confidence of the location information 1 may include the following steps.
✧ Obtain a first set, where the first set includes at least one piece of location information, each piece of location information in the first set identifies a location of the reflecting surface 1 on the spatial map, and the first set includes the location information 1.
✧ Determine the confidence of the location information 1 based on a feedback count of the location information 1 in the first set.

With reference to Table 1, the first set includes the eight pieces of location information, and each piece of location information identifies a location of the reflecting surface 1 on the spatial map. The feedback count of the location information a1 (which is the location information 1) is 3, and the core network device may determine, based on this, that the confidence of the location information a1 is 0.375 (=3/8).

In this way, the core network device can determine the confidence of the first location information based on the feedback count (that is, a proportion of the feedback count) of the first location information, so that the confidence of the first location information is more reliable (because a plurality of devices feed back same location information, confidence of the location information is higher than confidence of location information that is fed back for fewer times), and the first apparatus or the core network device can perform localization or fingerprint database construction based on the location information with the higher confidence.

In a possible implementation, that the core network device determines the confidence of the location information 1 may include the following steps.
✧ Obtain a first set, where the first set includes at least one piece of location information, each piece of location information in the first set identifies a location of the reflecting surface 1 on the spatial map, and the first set includes the location information 1.
✧ Determine a ground truth of the location of the reflecting surface 1 on the spatial map through weighted averaging on the first set, and determine the confidence of the location information 1 based on the ground truth and the location information 1.

With reference to Table 1, the first set includes the eight pieces of location information, and each piece of location information identifies a location of the reflecting surface 1 on the spatial map.

For example, the core network device determines the ground truth of the location of the reflecting surface 1 on the spatial map through weighted averaging on the first set. For example, two dimensions of the eight pieces of location information are separately summed and then averaged to obtain x_begin_ ave=(x1*3+x9*2+x3+x5+x7)/8, y_begin_ave=(y1*3+y9*2+y3+y5+y7)/8, x_end_ave=(x2*3+x10*2+x4+x6+x8)/8, and y_end_ave=(y2*3+y10*2+y4+y6+y8)/8. Therefore, a location ground truth 1 determined through weighted averaging on the eight pieces of location information is [{x_begin_ave, y_begin_ave}, {x_end_ave, y_end_ave}]. Then, confidence of the location information a1 is determined based on a Euclidean distance 1 between the location information a1 and the location ground truth 1, and the Euclidean distance 1 $\left(dist1\right) = \sqrt{{\left(x_begin_ave-x1\right)}^{2} + {\left(y_begin_ave-y1\right)}^{2} + {\left(x_end_ave-x2\right)}^{2} + {\left(y_end_ave-y2\right)}^{2}}$. Confidence 1 is determined based on dist1, and may be the confidence 1=1/(dist1+1), or may be a preconfigured discrete value correspondence between the confidence 1 and dist1. This is not limited.

The core network device may determine, through weighted averaging on the first set, the ground truth representing the location of the first reflecting surface on the spatial map, and determine the confidence of the first location information based on the Euclidean distance between the ground truth of the location and the first location information. In this way, the confidence of the first location information is more reliable, and the first apparatus or the core network device can perform localization or fingerprint database construction based on the location information with the higher confidence.

In a possible implementation, that the core network device determines the confidence of the location information 1 may include the following steps.
✧ Obtain a first set, where the first set includes at least one piece of location information, each piece of location information in the first set identifies a location of the reflecting surface 1 on the spatial map, and the first set includes the location information 1.
✧ Determine the confidence of the location information 1 through weighted averaging on the first set.

With reference to Table 1, the first set includes the eight pieces of location information, and each piece of location information identifies a location of the reflecting surface 1 on the spatial map.

The core network device determines confidence 1 of the location information a1 (which may be the location information 1) through weighted averaging on the first set. For example, two dimensions of the eight pieces of location information are separately summed and then averaged to obtain x_begin_ave=(x1*3+x9*2+x3+x5+x7)/8, y_begin_ave=(y1*3+y9*2+y3+y5+y7)/8, x_end_ave=(x2*3+x10*2+x4+x6+x8)/8, and y_end_ave=(y2*3+y10*2+y4+y6+y8)/8. The location ground truth 1 of the reflecting surface 1 is [{x_begin_ave, y_begin_ave}, {x_end_ave, y_end_ave}].

Confidence of the location information a1 is determined based on a Euclidean distance 1 between the location information a1 and the location ground truth 1, and the Euclidean distance $1 = \sqrt{{\left(x_begin_ave-x1\right)}^{2} + {\left(y_begin_ave-y1\right)}^{2} + {\left(x_end_ave-x2\right)}^{2} + {\left(y_end_ave-y2\right)}^{2}}$.

The confidence of the location information a1 may be determined based on the Euclidean distance 1. For example, the confidence of the location information a1=1/(Euclidean distance 1+1), or the confidence of the location information a1 is in a preconfigured discrete value correspondence with the Euclidean distance 1. This is not limited. In this way, the first apparatus or the core device can perform localization or fingerprint database construction based on location information with higher confidence.

In a possible implementation, after determining the confidence of the location information, the core network device may compare the confidence with a first threshold. If the confidence is higher than or equal to the first threshold, the confidence is set to 1. If the confidence is lower than the first threshold, the confidence is set to 0. For example, the core network device determines that the confidence of the location information a1 is 0.385, which is lower than the first threshold (0.8). The core network device may set the confidence of the location information a1 to 0, and indicate, to the first apparatus, that the confidence of the location information a1 is 0. In this way, the first apparatus or the core device can perform localization or fingerprint database construction based on location information with higher confidence.

In a possible implementation, determining confidence of second location information includes normalizing the confidence determined based on the location ground truth or the confidence determined based on the proportion of the feedback count, that is, comparing the confidence with a threshold, setting confidence higher than or equal to the threshold to 1, and setting confidence lower than the threshold to 0. In this way, location information with higher confidence can be obtained.

It should be noted that a quantity of pieces of location information sent by each apparatus to the core network device is not limited in this embodiment of this application. For example, the core network device may receive eight pieces of location information from eight apparatuses, or may receive eight pieces of location information from six apparatuses. This is not limited.

In addition, a moment when each apparatus sends the location information to the core network device is not limited in this embodiment of this application. For example, the eight pieces of location information may be eight pieces of location information received by the core network device at a same moment, or may be eight pieces of location information in total received by the core network device at six different moments. This is not limited.

S804: The core network device sends information 1 (for example, first information) to the first apparatus.

Correspondingly, the first apparatus receives the information 1, where the information 1 indicates the confidence of the location information 1.

It should be noted that when the core network device receives a plurality of pieces of location information from a plurality of apparatuses, the core network device may send corresponding confidence to an apparatus that sends the location information. For example, the core network device receives two pieces of location information from an apparatus 1, and the core network device sends confidence of the two pieces of location information to the apparatus 1.

In a possible implementation, the core network device may arrange, based on a sequence of the location information sent by the apparatuses, information about confidence corresponding to the location information. For example, the core network device receives the location information a1, the location information a3, and the location information a2 of an apparatus 1, and the core network device sends confidence of the location information a1, confidence of the location information a3, and confidence of the location information a2 to the apparatus 1.

In another possible implementation, an apparatus may configure an identifier for each piece of location information, and the apparatus may send the identifier of the location information and the location information to the core network device. The core network device may also send confidence of the location information and the identifier of the location information to the apparatus. In this way, the apparatus can distinguish between confidence corresponding to pieces of location information. For specific descriptions, refer to Table 2 and Table 3.

**Table 2**

| | |
|---|---|
| ID of the location information a1 | [{x1, y1}, {x2, y2}] |
| ID of the location information a2 | [{x3, y3}, {x4, y4}] |
| ID of the location information a3 | [{x5, y5}, {x6, y6}] |
| ID of the location information a4 | [{x7, y7}, {x8, y8}] |
| ID of the location information a5 | [{x9, y10}, {x9, y10}] |
| ID of the location information a1 | [{x1, y1}, {x2, y2}] |
| ID of the location information a1 | [{x1, y1}, {x2, y2}] |
| ID of the location information a5 | [{x9, y10}, {x9, y10}] |

As shown in Table 2, the core network device may receive an ID of location information and corresponding location information, for example, an ID of location information 1 and the location information 1, an ID of location information 2 and the location information 2, an ID of location information 3 and the location information 3, an ID of location information 4 and the location information 4, and an ID of location information 5 and the location information 5. In this way, the core network device can determine coordinate information corresponding to each piece of location information.

**Table 3**

| | |
|---|---|
| ID of the location information a1 | 0.375 |
| ID of the location information a2 | 0.125 |
| ID of the location information a3 | 0.125 |
| ID of the location information a4 | 0.125 |
| ID of the location information a5 | 0.25 |
| ID of the location information a1 | 0.375 |
| ID of the location information a1 | 0.375 |
| ID of the location information a5 | 0.25 |

As shown in Table 3, the core network device may send an ID and confidence of location information to each apparatus, for example, the ID of the location information 1 and confidence of 0.375 of the location information 1, the ID of the location information 2 and confidence of 0.125 of the location information 2, the ID of the location information 3 and confidence of 0.125 of the location information 3, the ID of the location information 4 and confidence of 0.125 of the location information 4, and the ID of the location information 5 and confidence of 0.25 of the location information 5. In this way, the apparatus can determine confidence corresponding to each piece of location information.

In this solution, the first apparatus sends the first location information to the core network device, where the first location information can identify a location of the first reflecting surface on the spatial map. The core network device determines confidence of the first location information, and sends the confidence of the first location information to the first apparatus. The first apparatus may determine, based on the confidence of the first location information, whether to obtain new location information identifying a location of the first reflecting surface on the spatial map. For example, when the confidence of the first location information is lower than a specific value, the first apparatus obtains new location information. When the confidence of the first location information is higher than or equal to a specific value, the first apparatus locates the terminal device based on the first location information, or may construct a fingerprint database based on the first location information.

Based on this solution, the first apparatus or the core network device may locate the terminal device or construct the fingerprint database based on location information with higher confidence or location information with confidence higher than a specific value. Compared with a solution in which a first apparatus directly locates a terminal device or constructs a fingerprint database based on first location information, the solution can effectively prevent the first apparatus from using location information with low accuracy (the low accuracy may be caused by a measurement error or a multipath transmission factor) for localization or fingerprint database construction, to improve accuracy of locating the terminal device.

In conclusion, the first apparatus and the core network device may exchange location information and confidence of the location information. This helps the first apparatus and/or the core network device construct a fingerprint database based on location information with confidence higher than a specific value, and locate the terminal device based on the fingerprint database, to improve the accuracy of locating the terminal device.

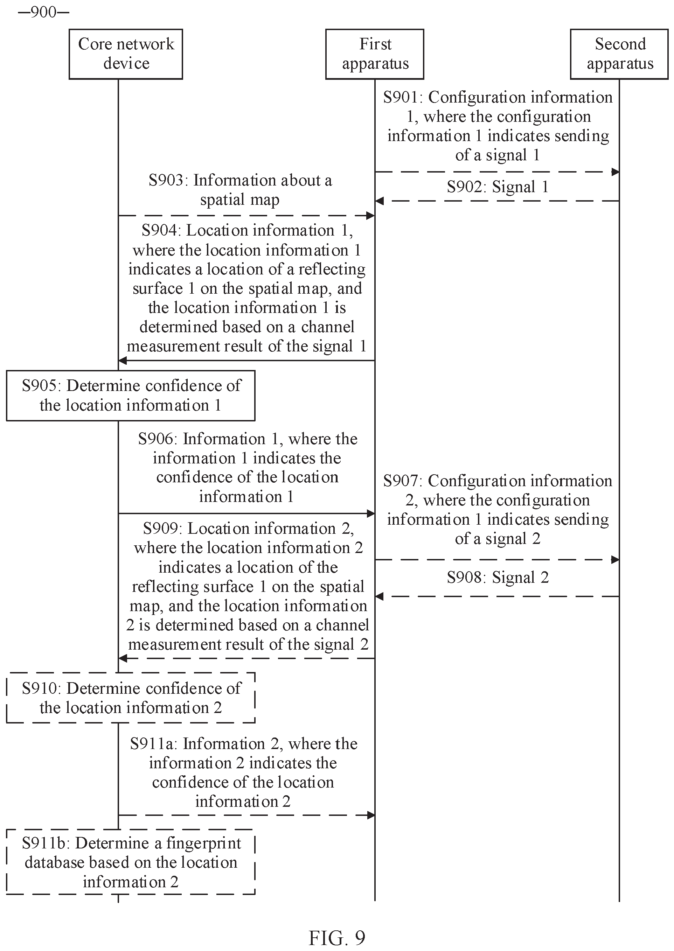

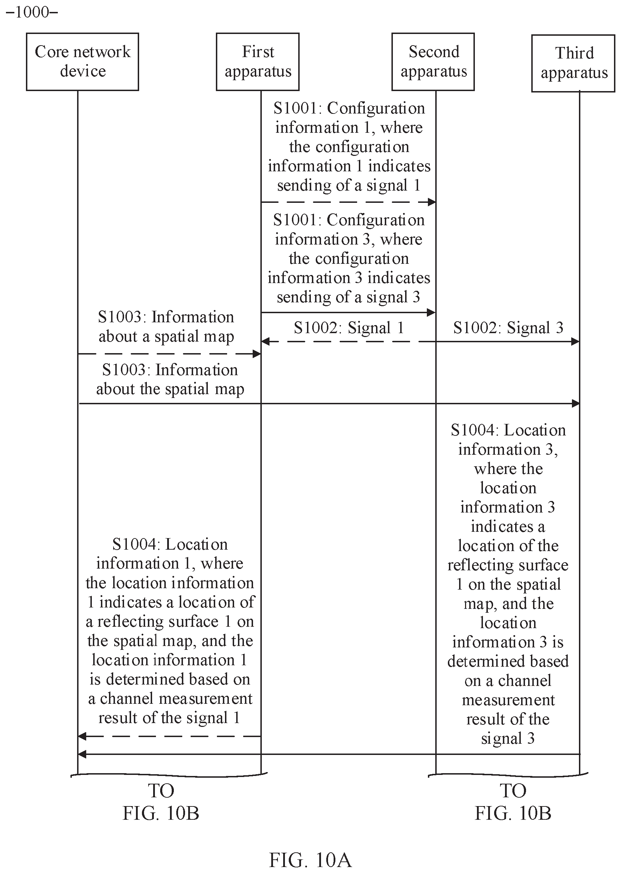

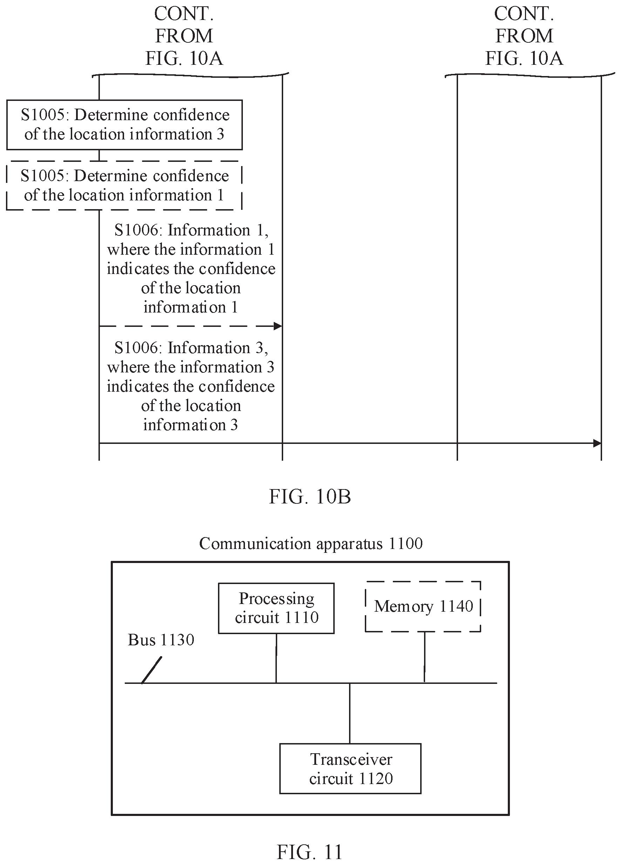

The following further describes the method shown in FIG. 8 with reference to FIG. 9, FIG. 10A, and FIG. 10B.

FIG. 9 is a schematic interaction flowchart of a communication method 900 according to an embodiment of this application. As shown in FIG. 9, the method includes the following steps.

Optionally, in S901, a first apparatus sends configuration information 1 to a second apparatus.

Correspondingly, the second apparatus receives the configuration information 1.

The configuration information 1 can indicate a sending configuration of a signal 1. For example, the configuration information 1 may be used to configure a time-frequency resource for sending the signal 1. The second apparatus may send the signal 1 based on the configured time-frequency resource in the configuration information 1.

Optionally, the first apparatus may be a network device, and the second apparatus may be a PRU.

Optionally, in S902, the second apparatus sends the signal 1 to the first apparatus.

Correspondingly, the first apparatus receives the signal 1.

Optionally, the signal 1 may be an SRS.

For example, the second apparatus may send the signal 1 to the first apparatus based on the configuration information 1.

In a possible implementation, a location of a transmit end of the signal 1 is located on a spatial map. The location of the transmit end of the signal 1 is known. The first apparatus may determine location information 1 based on the location of the transmit end of the signal 1 in combination with a channel measurement result of the signal 1.

Further, both the location of the transmit end of the signal 1 and a location of the first apparatus are known. The first apparatus may determine the location information 1 based on the location of the transmit end of the signal 1, the location of the first apparatus, the channel measurement result of the signal 1, and information about the spatial map.

Optionally, in S903, a core network device sends the information about the spatial map to the first apparatus.

Correspondingly, the first apparatus receives the information about the spatial map.

For descriptions of the information about the spatial map, refer to the descriptions in FIG. 8. Details are not described again.

An execution sequence of S903 and S901 or S902 may not be limited, provided that S903 is performed before S904.

S904: The first apparatus sends the location information 1 to the core network device.

Correspondingly, the core network device receives the location information 1.

For descriptions of S904, refer to the descriptions of S802. Details are not described again.

S905: The core network device determines confidence of the location information 1.

For specific descriptions, refer to the descriptions of S803. Details are not described again.

S906: The core network device sends information 1 to the first apparatus.

Correspondingly, the first apparatus receives the information 1.

In a possible implementation, the confidence of the location information 1 indicated by the information 1 is higher than or equal to a first value, and the first apparatus may locate a terminal device based on the location information 1. In this way, the first apparatus can locate the terminal device based on the location information 1 with confidence higher than the first value, to improve accuracy of locating the terminal device.

For example, the confidence of the location information 1 is higher than or equal to the first value, and the first apparatus may locate the terminal device based on the location information 1. For descriptions of how the first apparatus locate the terminal device based on the location information 1, refer to the descriptions in FIG. 7. Details are not described again.

The threshold 1 may be predefined or preconfigured. For example, the first value is predefined or preconfigured as 0.3. When the confidence of the location information 1 indicated by the information 1 is 0.375, which is higher than 0.3, the first apparatus may construct a fingerprint database based on the location information 1, and may locate the terminal device based on the fingerprint database.

In another possible implementation, if the confidence of the location information 1 indicated by the information 1 is lower than or equal to a second value, the first apparatus may re-determine location information of the reflecting surface 1.

The second value may be predefined or preconfigured. For example, the second value is predefined or preconfigured as 0.5. When the confidence of the location information 1 indicated by the information 1 is 0.375, which is lower than 0.5, the first apparatus re-determines location information of the reflecting surface 1. Correspondingly, the first apparatus may send configuration information again to the second apparatus. For details, refer to the following description.

Optionally, in S907, the first apparatus sends configuration information 2 to the second apparatus, where the configuration information 2 indicates a sending configuration of a signal 2.

Correspondingly, the second apparatus receives the configuration information 2.

For descriptions of the configuration information 2, refer to the descriptions of the configuration information 1. Details are not described herein again.

Optionally, in S908, the second apparatus sends the signal 2 to the first apparatus.

Correspondingly, the first apparatus receives the signal 2.

Optionally, the signal 2 may be an SRS.

For example, the second apparatus may send the signal 2 to the first apparatus based on the configuration information 2.

In a possible implementation, a location of a transmit end of the signal 2 is the same as the location of the transmit end of the signal 1. The location of the transmit end of the signal 2 is known. The first apparatus may determine location information 2 based on the location of the transmit end of the signal 2 in combination with a channel measurement result of the signal 2.

Because the location of the transmit end of the first signal is the same as the location of the transmit end of the second signal, the first apparatus determines, based on the same location of the transmit ends of the signals, location information with higher confidence, to reduce impact of a measurement error on the confidence of the location information.

When the confidence of the location information 1 is lower than or equal to the second value, the first apparatus may determine new location information identifying a location of the reflecting surface 1 on the spatial map. In this way, the first apparatus can obtain location information with higher confidence or location information that satisfies a specific requirement, to improve the accuracy of locating the terminal device.

Optionally, S909: The first apparatus sends the location information 2 to the core network device.

Correspondingly, the core network device receives the location information 2.

The location information 2 is determined by the first apparatus based on a channel measurement result of the signal 2 and the information about the spatial map. The location information 2 identifies, indicates, or represents a location of the reflecting surface 1 on the spatial map.

For descriptions of S909, refer to the descriptions of S802. Details are not described again.

Optionally, S910: The core network device determines confidence of the location information 2.

For example, that the core network device determines the confidence of the location information 2 includes the following steps.
✧ Obtain a second set, where the second set includes at least one piece of location information, each piece of location information in the second set identifies a location of the reflecting surface 1 on the spatial map, and the second set includes the location information 2.
✧ Determine the confidence of the location information 2 through weighted averaging on the second set.

For descriptions of determining the confidence of the location information 2 by the core network device, refer to the descriptions of determining the confidence of the location information 1 by the core network device. Details are not described again.

In this way, the core network device can determine the confidence of the second location information through weighted averaging on the second set, and the first apparatus or the core network device can perform localization or fingerprint database construction based on location information with higher confidence or confidence higher than a threshold, to improve the accuracy of locating the terminal device.

The core network device may alternatively determine the confidence of the location information 2 in another manner. For details, refer to the descriptions of the confidence of the location information 1 in FIG. 8.

Based on this solution, the core network device can construct a fingerprint database based on location information with confidence higher than a specific value, and perform localization based on the fingerprint database, to improve the accuracy of locating the terminal device.

In a possible implementation, the method 900 may further include the following steps.

S911a: The core network device sends information 2 to the first apparatus, where the information 2 indicates the confidence of the location information 2.

Correspondingly, the first apparatus receives the information 2, the confidence of the location information 2 is determined based on the information 2.

In this way, the first apparatus can determine the confidence of the location information 2, and determine, based on the confidence of the location information 2, whether localization or fingerprint database construction can be performed based on the location information 2.

In a possible implementation, the confidence of the location information 2 is higher than or equal to a third value, and the first apparatus locates a terminal device based on the location information 2. In this way, the first apparatus can locate the terminal device based on the location information 2 with confidence higher than the threshold, to improve accuracy of locating the terminal device.

When the confidence of the location information 2 indicated by the information 2 is lower than or equal to a fourth value, the first apparatus re-determines location information of the reflecting surface 1, and sends the newly determined location information of the reflecting surface 1 to the core network device.

In a possible implementation, the confidence of the location information 2 is higher than or equal to the confidence of the location information 1. The core network device sends, to the first apparatus, the information 1 indicating the confidence of the location information 1, so that the first apparatus performs location information iteration based on the information 1, to obtain location information with higher confidence, and the first apparatus locates the terminal device or constructs a fingerprint database based on the location information with higher confidence.

In a possible implementation, the method 900 may further include the following steps.

S911b: The core network device determines a fingerprint database based on the location information 2.

If the confidence of the location information 2 is higher than or equal to a fifth value, the core network device constructs the fingerprint database based on the location information 2, where the fingerprint database is for localization. In this way, the core network device can construct the fingerprint database based on the location information with higher confidence, to improve the accuracy of locating the terminal device.

For a manner of constructing the fingerprint database, refer to an existing standard or the descriptions of FIG. 7. Details are not described again.

In a possible implementation, as described in S903, the core network device may send the information about the spatial map to the first apparatus. This helps the first apparatus construct the space shown in FIG. 7. In this way, the first apparatus may determine, based on the information about the spatial map, the location information identifying the location of the reflecting surface 1 on the spatial map.

The solution shown in FIG. 9 is described by using an example in which the confidence of the location information is determined and fed back through interaction between the first apparatus, the second apparatus, and the core network device. The following describes, with reference to FIG. 10A and FIG. 10B, determining and feeding back confidence of location information through interaction between a plurality of apparatuses.

FIG. 10A and FIG. 10B are a schematic interaction flowchart of a communication method 1000 according to an embodiment of this application. As shown in FIG. 10A and FIG. 10B, the method includes the following steps.

Optionally, in S1001, a first apparatus sends configuration information 3 to a second apparatus.

Optionally, the first apparatus further sends configuration information 1 to the second apparatus.

Correspondingly, the second apparatus receives the configuration information 1 and the configuration information 3.

The configuration information 1 includes a configuration of a signal 1, and the configuration signal 3 includes a configuration of a signal 3.

It may be understood that an apparatus that sends the configuration information 1 to the second apparatus may alternatively be an apparatus other than the first apparatus. This is not limited herein.

For specific descriptions, refer to S901. Details are not described herein again.

Optionally, the first apparatus may be a network device, the second apparatus may be a PRU or a terminal device, and a third apparatus may be a terminal device or a PRU.

Optionally, the signal 1 may be an SRS, and the signal 3 may be an SL-PRS.

Optionally, a transmit end of the signal 3 is the second apparatus, and a receive end is the third apparatus.

S1002: The second apparatus sends the signal 3 to the third apparatus.

Optionally, the second apparatus sends the signal 1 to the first apparatus.

For specific descriptions, refer to S902. Details are not described herein again.

Optionally, in S1003, a core network device or the first apparatus sends information about a spatial map to the third apparatus.

Correspondingly, the third apparatus receives the information about the spatial map.

Optionally, the core network device further sends the information about the spatial map to the first apparatus.

Correspondingly, the first apparatus receives the information about the spatial map.

A sequence of S1003 and S1001 or S1002 may not be limited, provided that S1003 is performed before S1004.

For specific descriptions, refer to S903. Details are not described herein again.

S1004: The third apparatus sends location information 3 to the core network device.

Optionally, the first apparatus sends location information 1 to the core network device.

Correspondingly, the core network device receives the location information 3.

Optionally, the core network device receives the location information 1.

For specific descriptions, refer to S904. Details are not described herein again.

S1005: The core network device determines confidence of the location information 3.

Optionally, the core network device determines confidence of the location information 1.

For specific descriptions, refer to S905. Details are not described herein again.

S1006: The core network device sends information 3 to the third apparatus.

Optionally, the core network device sends information 1 to the first apparatus.

Correspondingly, the third apparatus receives the information 3.

Optionally, the first apparatus receives the information 1.

For specific descriptions, refer to S906. Details are not described herein again.

When the confidence of the location information respectively indicated by the information 1 and/or the information 3 is lower than a threshold, the first apparatus and the third apparatus may re-determine location information of the reflecting surface, and may continue to send the newly obtained location information to the core network device. For specific descriptions, refer to FIG. 9. Details are not described again.

A plurality of apparatuses jointly complete feedback of the location information and determining of the confidence of the location information, so that the first apparatus/the third apparatus/the core network device can construct a fingerprint database based on location information with confidence higher than a specific value, and can locate a terminal device based on the fingerprint database, to improve accuracy of locating the terminal device.

It should be noted that the methods in FIG. 8 to FIG. 10A and FIG. 10B are described by using an example in which the core network device determines the confidence. However, a scenario in which the terminal device or the network device determines the confidence of the location information is not limited. For example, after determining channel measurement results of signals, a plurality of apparatuses may send the channel measurement results obtained by the plurality of apparatuses to a central apparatus, and the central apparatus determines location information and confidence of the location information. The central apparatus may be a network device or a terminal device. This is not limited.

Finally, apparatus embodiments in embodiments of this application are described.

To implement functions in the method provided in this application, the first apparatus and the second apparatus may both include a hardware structure and/or a software module, to implement the foregoing functions in a form of the hardware structure, the software module, or a combination of the hardware structure and the software module. Whether a function in the foregoing functions is performed via the hardware structure, the software module, or the combination of the hardware structure and the software module depends on particular applications and design constraints of the technical solutions.

FIG. 11 is a block diagram of a communication apparatus 1100 according to an embodiment of this application. The communication apparatus 1100 includes a processing circuit 1110 and a transceiver circuit 1120. The processing circuit 1110 and the transceiver circuit 1120 may be connected to each other through a bus 1130. The communication apparatus 1100 may be a first apparatus or a second apparatus.

Optionally, the communication apparatus 1100 may further include a memory 1140. The memory 1140 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1140 is configured to store related instructions and data.

The processing circuit 1110 may be one or more processors or a circuit that is in a processor and that is used for a processing function. The processor may include a central processing unit (central processing unit, CPU). When the processing circuit 1110 is one CPU, the CPU may be a single-core CPU or a multi-core CPU. Optionally, the processing circuit 1110 may be a signal processor, a chip, or another integrated circuit that can implement the method in this application, or a part of a circuit that is in the foregoing processor, chip, or integrated circuit and that is configured to perform a processing function. In addition, the transceiver circuit 1120 may alternatively be a transceiver or an input/output interface. The input/output interface is configured to input or output a signal or data, and may also be referred to as an input/output circuit.

When the communication apparatus 1100 is a first apparatus, for example, the processing circuit 1110 is configured to perform the following operations: obtaining a channel measurement result of a signal 1, sending location information 1 to a second apparatus, receiving information 1, and the like.

When the communication apparatus 1100 is a second apparatus, for example, the processing circuit 1110 is configured to perform the following operations: receiving location information 1, determining confidence of the location information 1, sending information 1, and the like.

The foregoing content is merely used as an example for description. When the communication apparatus 1100 is the first apparatus or the second apparatus, the communication apparatus 1100 is responsible for performing the methods or steps related to the first apparatus or the second apparatus in the foregoing method embodiments.

It may be understood that when the communication apparatus 1100 is the first apparatus or the second apparatus, the transceiver circuit 1120 is a transceiver. When the communication apparatus 1100 is a chip used in the first apparatus or the second apparatus, the transceiver circuit 1120 is an input/output circuit. The foregoing descriptions are merely examples. For specific content, refer to content shown in the method embodiments. For an implementation of the operations in FIG. 11, refer to the corresponding descriptions of the method embodiments shown in FIG. 8 to FIG. 10A and FIG. 10B.

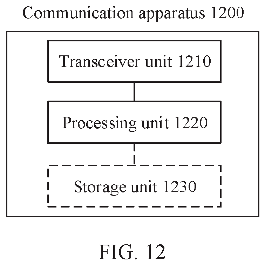

FIG. 12 is a block diagram of a communication apparatus 1200 according to an embodiment of this application. The communication apparatus 1200 may be a first apparatus or a second apparatus.

The communication apparatus 1200 includes a transceiver unit 1210 and a processing unit 1220. The following describes the transceiver unit 1210 and the processing unit 1220 by using examples.

The transceiver unit 1210 may include a sending unit and a receiving unit. The sending unit is configured to perform a sending action of the communication apparatus, and the receiving unit is configured to perform a receiving action of the communication apparatus. For ease of description, in embodiment of this application, the sending unit and the receiving unit are combined into one transceiver unit. Unified descriptions are provided herein, and details are not described below again.

When the communication apparatus 1200 is a first apparatus, for example, the transceiver unit 1210 is configured to send location information 1, and the processing unit 1220 is configured to obtain a channel measurement result of a signal 1. The processing unit 1220 is configured to perform content of steps such as processing and control related to the first apparatus.

When the communication apparatus 1200 is a second apparatus, for example, the transceiver unit 1210 is configured to receive location information 1, and is further configured to send information 1. The processing unit 1220 is configured to perform content of steps such as processing and control that are related to the second apparatus. For example, the processing unit 1220 is configured to determine confidence of the location information 1 and the like.

When the communication apparatus 1200 is the first apparatus or the second apparatus, the communication apparatus 1200 is responsible for performing one or more of the methods or steps related to the first apparatus or the second apparatus in the foregoing method embodiments.

Optionally, the communication apparatus 1200 may further include a storage unit 1230. The storage unit 1230 is configured to store a program or code for performing the foregoing methods.

The transceiver unit in FIG. 12 may correspond to the transceiver circuit in FIG. 11, and the processing unit in FIG. 12 may correspond to the processing circuit in FIG. 11.

The apparatus embodiments shown in FIG. 11 and FIG. 12 are used for implementing the content described in FIG. 8 to FIG. 10A and FIG. 10B. For specific execution steps and methods of the apparatuses shown in FIG. 11 and FIG. 12, refer to the content described in the foregoing method embodiments.

This application further provides a chip, including a processor, configured to: invoke instructions from a memory and run the instructions stored in the memory, so that a communication device on which the chip is installed performs the methods in the foregoing examples. The memory may be integrated into the chip, or may be located outside the chip.

This application further provides another chip, including an input interface, an output interface, and a processor. The input interface, the output interface, and the processor are connected through an internal connection path. The processor is configured to execute code in a memory. When the code is executed, the processor is configured to perform the methods in the foregoing examples.

Optionally, the chip further includes the memory. The memory is configured to store a computer program or the code.

This application further provides a processor, configured to be coupled to a memory, and configured to perform a method and a function that are related to the network device or the terminal device in any one of the foregoing embodiments. The memory may be located inside the processor, or may be located outside the processor.

Another embodiment of this application provides a computer program product including instructions. When the computer program product runs on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

The processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

A memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

All or a part of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the computer instructions or computer programs are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, a magnetic tape), an optical medium (for example, a DVD), or a semiconductor medium. The semiconductor medium may be a solid-state drive.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In several embodiments provided in this application, the disclosed systems, apparatuses, and methods may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. A part or all of the units may be selected based on actual requirements to achieve the objectives of the solutions of embodiments. In addition, functional units in embodiments of this application may be integrated into one processing unit, or each of the units may exist alone physically, or two or more units may be integrated into one unit. When the functions are implemented in a form of software functional unit and sold or used as an independent product, the functions may be stored in a computer-readable storage medium.

Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, or a network device) to perform all or a part of the steps of the methods described in embodiments of this application. The foregoing storage medium includes any medium that can store program code, for example, a USB flash disk, a removable hard disk, a read-only memory, a random access memory, a magnetic disk, or an optical disc.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

## Claims

1. A communication method, comprising:
obtaining a channel measurement result of a first signal;
sending first location information, wherein the first location information identifies a location of a first reflecting surface on a spatial map, and the first location information is determined based on the channel measurement result of the first signal and information about the spatial map; and
receiving first information, wherein the first information indicates confidence of the first location information.

2. The method according to claim 1, wherein the confidence of the first location information is higher than or equal to a first value, and the method further comprises:
locating a terminal device based on the first location information, wherein
the first value is predefined, or the first value is preconfigured.

3. The method according to claim 1, wherein the confidence of the first location information is lower than or equal to a second value, and the method further comprises:
obtaining a channel measurement result of a second signal; and
determining second location information based on the channel measurement result of the second signal and the information about the spatial map, wherein the second location information identifies a location of the first reflecting surface on the spatial map, wherein
the second value is predefined, or the second value is preconfigured.

4. The method according to claim 3, wherein the method further comprises:
sending the second location information; and
receiving second information, wherein the second information indicates confidence of the second location information.

5. The method according to claim 3 or 4, wherein the confidence of the second location information is higher than or equal to a third value, and the method further comprises:
locating a terminal device based on the second location information.

6. The method according to any one of claims 3 to 5, wherein the confidence of the second location information is higher than the confidence of the first location information.

7. The method according to any one of claims 1 to 6, wherein the method further comprises:
obtaining the information about the spatial map.

8. The method according to any one of claims 1 to 7, wherein a location of a transmit end of the first signal is on the spatial map.

9. The method according to any one of claims 3 to 8, wherein a location of a transmit end of the second signal is the same as the location of the transmit end of the first signal.

10. A communication method, comprising:
determining confidence of first location information, wherein the first location information identifies a location of a first reflecting surface on a spatial map; and
sending first information, wherein the first information indicates the confidence of the first location information.

11. The method according to claim 10, wherein determining the confidence of the first location information comprises:
obtaining a first set, wherein the first set comprises at least one piece of location information, each piece of location information in the first set identifies a location of the first reflecting surface on the spatial map, and the first set comprises the first location information; and
determining a ground truth of the location of the first reflecting surface on the spatial map through weighted averaging on the first set, and determining the confidence of the first location information based on the ground truth and the first location information.

12. The method according to claim 10, wherein determining the confidence of the first location information comprises:
obtaining a first set, wherein the first set comprises at least one piece of location information, each piece of location information in the first set identifies a location of the first reflecting surface on the spatial map, and the first set comprises the first location information; and
determining the confidence of the first location information through weighted averaging on the first set.

13. The method according to claim 10, wherein determining the confidence of the first location information comprises:
obtaining a first set, wherein the first set comprises at least one piece of location information, each piece of location information in the first set identifies a location of the first reflecting surface on the spatial map, and the first set comprises the first location information; and
determining the confidence of the first location information based on a proportion of a feedback count of the first location information in the first set.

14. The method according to any one of claims 10 to 13, wherein the confidence of the first location information is higher than or equal to a first value, and the method further comprises:
determining a fingerprint database based on the first location information, wherein the fingerprint database is for locating a terminal device; and
the first value is predefined, or the first value is preconfigured.

15. The method according to any one of claims 10 to 14, wherein the method further comprises:
determining confidence of second location information, wherein the second location information identifies a location of the first reflecting surface on the spatial map.

16. The method according to claim 15, wherein determining the confidence of the second location information comprises:
obtaining a second set, wherein the second set comprises at least one piece of location information, each piece of location information in the second set identifies a location of the first reflecting surface on the spatial map, and the second set comprises the second location information; and
determining the confidence of the second location information through weighted averaging on the second set.

17. The method according to claim 15, wherein determining the confidence of the second location information comprises:
obtaining a second set, wherein the second set comprises at least one piece of location information, each piece of location information in the second set identifies a location of the first reflecting surface on the spatial map, and the second set comprises the second location information; and
determining a ground truth of the location of the first reflecting surface on the spatial map through weighted averaging on the second set, and determining the confidence of the second location information based on the ground truth and the second location information.

18. The method according to claim 15, wherein determining the confidence of the second location information comprises:
obtaining a second set, wherein the second set comprises at least one piece of location information, each piece of location information in the second set identifies a location of the first reflecting surface on the spatial map, and the second set comprises the second location information; and
determining the confidence of the second location information based on a feedback count of the second location information in the second set.

19. The method according to any one of claims 15 to 18, wherein the confidence of the second location information is higher than or equal to a second value, and the method further comprises:
determining a fingerprint database based on the second location information, wherein the fingerprint database is for locating an apparatus, and the second value is predefined, or the second value is preconfigured.

20. The method according to any one of claims 15 to 19, wherein the confidence of the second location information is higher than the confidence of the first location information.

21. The method according to any one of claims 15 to 20, wherein the method further comprises:
sending second information, wherein the second information indicates the confidence of the second location information.

22. The method according to any one of claims 10 to 21, wherein the method further comprises:
sending information about the spatial map.

23. A communication method, comprising:
obtaining a channel measurement result of a first signal;
determining first location information, wherein the first location information identifies a location of a first reflecting surface on a spatial map, and the first location information is determined based on the channel measurement result of the first signal and information about the spatial map; and
determining confidence of the first location information.

24. The method according to claim 23, wherein the confidence of the first location information is higher than or equal to a first value, and the method further comprises:
locating a terminal device based on the first location information, wherein
the first value is predefined, or the first value is preconfigured.

25. The method according to claim 23, wherein the confidence of the first location information is lower than or equal to a second value, and the method further comprises:
obtaining a channel measurement result of a second signal;
determining second location information based on the channel measurement result of the second signal and the information about the spatial map, wherein the second location information identifies a location of the first reflecting surface on the spatial map; and
determining confidence of the second location information, wherein
the second value is predefined, or the second value is preconfigured.

26. The method according to claim 25, wherein the confidence of the second location information is higher than or equal to a third value, and the method further comprises:
locating a terminal device based on the second location information.

27. The method according to claim 25 or 26, wherein the confidence of the first location information is lower than the confidence of the second location information.

28. The method according to any one of claims 23 to 27, wherein a location of a transmit end of the first signal is on the spatial map.

29. The method according to any one of claims 23 to 28, wherein a location of a transmit end of the second signal is the same as the location of the transmit end of the first signal.

30. A communication apparatus, comprising a processor, wherein the processor is configured to enable, by executing a computer program or instructions or via a logic circuit,
the communication apparatus to perform the method according to any one of claims 1 to 9, or
the communication apparatus to perform the method according to any one of claims 10 to 22; or
the communication apparatus to perform the method according to any one of claims 23 to 29.

31. A communication apparatus, comprising a logic circuit and an input/output interface, wherein the input/output interface is configured to input and/or output a signal; and
the logic circuit is configured to perform the method according to any one of claims 1 to 9; or
the logic circuit is configured to perform the method according to any one of claims 10 to 22, or
the logic circuit is configured to perform the method according to any one of claims 23 to 29.

32. A computer-readable storage medium, wherein the computer-readable storage medium stores a computer program or instructions; and when the computer program or the instructions are run on a computer,
the method according to any one of claims 1 to 9 is performed; or
the method according to any one of claims 10 to 22 is performed, or
the method according to any one of claims 23 to 29 is performed.

33. A computer program product, comprising instructions, wherein when the instructions are run on a computer,
the method according to any one of claims 1 to 9 is performed; or
the method according to any one of claims 10 to 22 is performed, or
the method according to any one of claims 23 to 29 is performed.

34. A chip system, comprising a processor, wherein the processor is configured to execute a computer program or instructions in a memory, to
enable the chip system to implement the method according to any one of claims 1 to 9; or
enable the chip system to implement the method according to any one of claims 10 to 22; or
enable the chip system to implement the method according to any one of claims 23 to 29.

35. A communication apparatus, comprising a module configured to perform the method according to any one of claims 1 to 29.
